# EUROPEAN PATENT SPECIFICATION

(11) **EP 3 309 606 B1**
(45) Date of publication and mention of the grant of the patent: **07.08.2019**
(21) Application number: 17196222.8
(22) Date of filing: 12.10.2017
(51) Int. Cl.: G02F 1/1335

(54) **DISPLAY DEVICE HAVING OPTICAL SENSORS**
ANZEIGEVORRICHTUNG MIT OPTISCHEN SENSOREN
DISPOSITIF D'AFFICHAGE COMPORTANT DES CAPTEURS OPTIQUES

(30) Priority: 13.10.2016 KR 20160133016
(43) Date of publication of application: 18.04.2018
(73) Proprietor: Samsung Display Co., Ltd., Gyeonggi-do 17113 (KR)
(72) Inventor: LEE, Dong Gyu, 17113 Gyeonggi-Do (KR); KANG, Jae Woong, 17113 Gyeonggi-Do (KR); PARK, Seung Hwan, 17113 Gyeonggi-Do (KR); PARK, Cheol Woo, 17113 Gyeonggi-Do (KR); JANG, Yong Jun, 17113 Gyeonggi-Do (KR); HWANG, Young Soo, 17113 Gyeonggi-Do (KR)
(74) Representative: Taor, Simon Edward William

(56) References cited:
- US-A1- 2012 268 701
- US-A1- 2016 033 823

## Description

Embodiments of the present invention relate to a display device, and more particularly, to a display device capable having optical sensors disposed therein.

Various types of display devices capable of displaying information are being developed. Examples of display devices may include a liquid crystal display, a plasma display panel device, an electrophoretic display device, and an organic light emitting display device.

US2012268701 discloses a display device provided with a photosensor, which can improve sensor sensitivity without affecting display.

A liquid crystal display may display an image by using optical anisotropy and birefringence of liquid crystal molecules. When an electrical field is applied, the arrangement of liquid crystals may be changed and light transmission characteristics may also be changed according to the changed direction in which the liquid crystals are arranged.

The liquid crystal display may include a color filter layer to display a desired color. Each pixel may include subpixels of various colors, and the color filter layer may permit each subpixel do pass light only of its particular color.

A display device includes a first substrate including a plurality of pixel areas and a peripheral area disposed adjacent to the plurality of pixel areas. A second substrate faces the first substrate. A liquid crystal layer is disposed between the first substrate and the second substrate. A backlight unit provides light to the liquid crystal layer. A color conversion layer is disposed between the liquid crystal layer and the second substrate and includes a plurality of sub-color conversion units converting and emitting the light provided by the backlight unit into light of different predetermined colors. An optical sensor is disposed within the peripheral area. The optical sensor detects the light emitted from the plurality of sub-color conversion units and generates an optical signal corresponding thereto.

A display device includes a first substrate, a second substrate, a liquid crystal layer disposed between the first and second substrates, a color conversion layer, and a plurality of optical sensors. The color conversion layer is disposed on the second substrate and includes a plurality of sub-color conversion units of a first type, a plurality of sub-color conversion units of a second type, and a plurality of sub-color conversion units of a third type. The first type of sub-color conversion units includes a first type of quantum dots for converting incident light into a first color. The second type of sub-color conversion units include a second type of quantum dots for converting incident light into a second color, different from the first color. The plurality of optical sensors is disposed proximately to the plurality of sub-color conversion units. The plurality of optical sensors includes first optical sensors for detecting the light of the first color, and second optical sensors for detecting the light of the second color.

According to an aspect of the invention, there is provided a display device as defined in the appended independent claim.

In some embodiments, the display device further comprises a first light blocking layer disposed in the peripheral area and blocking the light provided by the backlight unit from being incident on the peripheral area.

In some embodiments, the optical sensor is disposed between the first light blocking layer and each of the plurality of sub-color conversion units.

In some embodiments, the first light blocking layer is a black matrix.

In some embodiments, the peripheral area includes a plurality of peripheral areas disposed adjacent to the plurality of pixel areas, and the optical sensor corresponds to each of the plurality of peripheral areas.

In some embodiments, the display device further comprises a second light blocking layer preventing the light provided by the backlight unit from being incident on the optical sensor.

In some embodiments, the second light blocking layer is disposed at a first side of the optical sensor.

In some embodiments, the second light blocking layer includes a same material as the first light blocking layer.

In some embodiments, the second light blocking layer is a filter transmitting light having a predetermined wavelength.

In some embodiments, the color conversion layer includes a plurality of emission groups each including a predetermined number of sub-color conversion units, among the plurality of sub-color conversion units, and the optical sensor is disposed in each of the plurality of emission groups.

In some embodiments, the optical sensor is configured to detect light emitted from the predetermined number of sub-color conversion units included in each of the plurality of emission groups.

In some embodiments, each of the plurality of sub-color conversion units includes: a first sub-color conversion unit receiving the light provided by the backlight unit and emitting a first color light; a second sub-color conversion unit receiving the light provided by the backlight unit and emitting a second color light; and a third sub-color conversion unit receiving the light provided by the backlight unit and emitting a third color light.

In some embodiments, the first sub-color conversion unit includes first quantum dots, the second sub-color conversion unit includes second quantum dots, and the third sub-color conversion unit includes third quantum dots.

In some embodiments, the first quantum dots are red quantum dots, the second quantum dots are green quantum dots, and the third quantum dots are blue quantum dots.

In some embodiments, the optical sensor includes: a first optical sensor detecting the first color light emitted from the first sub-color conversion unit; a second optical sensor detecting the second color light emitted from the second sub-color conversion unit; and a third optical sensor detecting the third color light emitted from the third sub-color conversion unit.

In some embodiments, the backlight unit includes a light source emitting blue light.

In some embodiments, the third sub-color conversion unit includes a transparent layer transmitting the blue light.

In some embodiments, the display device further comprises a touch sensor disposed on the second substrate.

In some embodiments, the display device further comprises a selective transmission unit disposed between the second electrode and the color conversion layer, transmitting light emitted from the liquid crystal layer to the color conversion layer, and reflecting the light incident on the liquid crystal layer from the color conversion layer.

In some embodiments, the display device further comprises a controller determining deterioration of the plurality of sub-color conversion units by using the optical signal, and outputting compensation data.

According to an aspect of the invention, there is provided A display device, comprising: a first substrate; a second substrate; a liquid crystal layer disposed between the first and second substrates; a color conversion layer disposed on the second substrate and including a plurality of sub-color conversion units of a first type, a plurality of sub-color conversion units of a second type, and a plurality of sub-color conversion units of a third type, the first type of sub-color conversion units including a first type of quantum dots for converting incident light into a first color, the second type of sub-color conversion units including a second type of quantum dots for converting incident light into a second color, different from the first color; and a plurality of optical sensors disposed proximately to the plurality of sub-color conversion units, the plurality of optical sensors including first optical sensors for detecting the light of the first color, and second optical sensors for detecting the light of the second color.

In some embodiments, the display device further includes a backlight unit for providing the incident light.

In some embodiments, the third type of sub-color conversion units includes no quantum dots and is configured to transmit the incident light, without changing the color of the incident light, and the plurality of optical sensors does not include optical sensors for detecting the incident light passed through the third type of sub-color conversion units.

In some embodiments, the third type of sub-color conversion units include a third type of quantum dots for converting incident light into a third color different from the first and second color, and the plurality of optical sensors includes third optical sensors for detecting the light of the third color.

In some embodiments, the display device further includes a black matrix for defining a plurality of pixels, wherein the plurality of optical sensors are disposed behind the black matrix.

According to an aspect of the invention, there is provided a display as set out in claim 1. Preferred features of this aspect are set out in claims 2 to 16.

These and other features of the present invention will become more apparent by describing in detail exemplary embodiments thereof with reference to the accompanying drawings of which:
FIG. 1 is a schematic perspective view illustrating a display device according to an exemplary embodiment of the present invention;
FIG. 2 is a schematic block diagram illustrating a display device according to an exemplary embodiment of the present invention;
FIG. 3 is a cross-sectional diagram taken along line I-I' of FIG. 1;
FIG. 4 is a cross-sectional diagram illustrating a direction in which light moves in a display device shown in FIG. 3;
FIG. 5 is a cross-sectional diagram illustrating a color conversion layer shown in FIG. 3;
FIGs. 6 to 8 are cross-sectional diagrams illustrating a color conversion layer shown in FIG. 5 according to an exemplary embodiment of the present invention;
FIG. 9 is a detailed cross-sectional diagram illustrating a display device shown in FIG. 3;
FIG. 10 is an enlarged view illustrating a first optical sensor of an optical sensor shown in FIG. 9;
FIGs. 11A to 11D are plan views illustrating an arrangement of components of a color conversion layer shown in FIG. 5;
FIG. 12 is an equivalent circuit diagram of an example of a pixel shown in FIG. 2;
FIG. 13 is a detailed plan view illustrating a pixel shown in FIG. 12;
FIG. 14 is a cross-sectional diagram taken along line II-II' of FIG. 13;
FIG. 15 is a cross-sectional diagram illustrating a display device according to an exemplary embodiment of the present invention;
FIG. 16 is a plan view illustrating a portion of a self-capacitance type touch sensor of a display device shown in FIG. 15;
FIG. 17 is a cross-sectional diagram taken along line III-III' of FIG. 16;
FIG. 18 is a plan view illustrating a portion of a mutual-capacitance type touch sensor of a display device shown in FIG. 15;
FIG. 19 is an enlarged view illustrating a portion corresponding to P1 of FIG. 18; and
FIG. 20 is a cross-sectional view taken along line IV-IV' of FIG. 19.

In describing exemplary embodiments of the present disclosure illustrated in the drawings, specific terminology is employed for sake of clarity. However, the present disclosure is not intended to be limited to the specific terminology so selected, and it is to be understood that each specific element includes all technical equivalents which operate in a similar manner.

Like reference numerals may be used for referring to the same or similar elements in the description and drawings. In the attached drawings, the dimensions of the components may be exaggerated for clarity of illustration. Terminologies such as first or second may be used to describe various components but the components are not limited by the above terminologies. The above terminologies are used to distinguish one component from the other component, for example, a first component may be referred to as a second component without departing from a scope in accordance with the concept of the present invention and similarly, a second component may be referred to as a first component. The terms of a singular form may include plural forms unless referred to the contrary.

Exemplary embodiments of the present invention will be described below in detail with reference to the accompanying drawings. However, the present invention may be embodied in different forms and should not be construed as limited to the embodiments set forth herein. In the drawings, the thickness of layers and regions may be exaggerated for clarity.

An exemplary embodiment of the present invention relates to a display device and is applicable to electronic devices displaying an image. A display device, according to an exemplary embodiment of the present invention, may be applied to various electronic devices such as a cellular phone, a smart phone, a laptop/notebook/ultrabook computer, a tablet computer, and/or a wearable device (including, for example, a smartwatch, smart glasses, a head mounted display (HMD), etc.).

The present invention will now be described more fully with reference to the accompanying drawings, in which exemplary embodiments of the invention are shown.

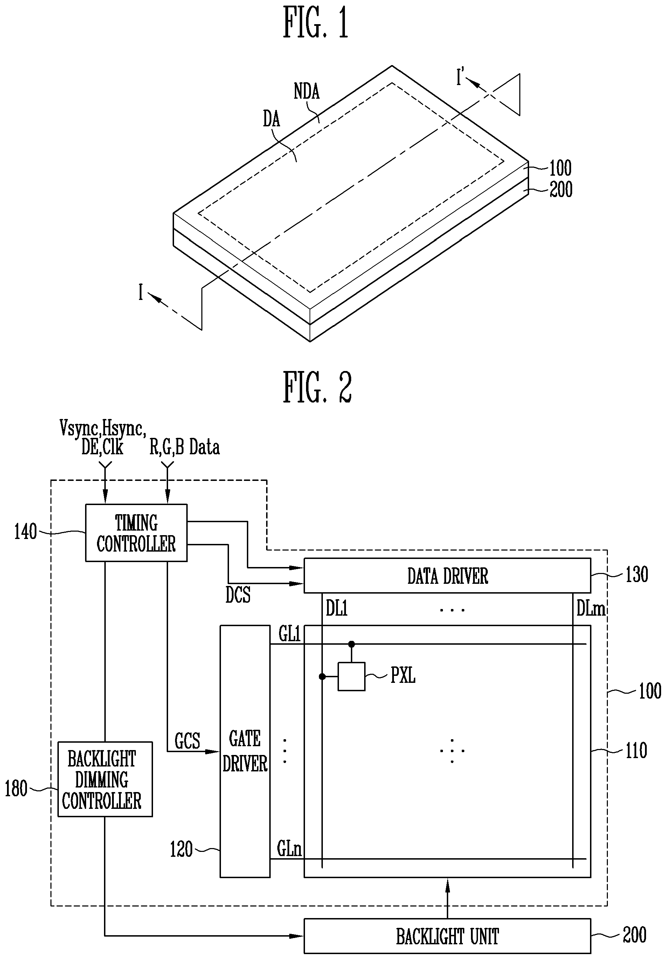

FIG. 1 is a perspective view illustrating a display device according to an exemplary embodiment of the present invention. FIG. 2 is a block diagram illustrating a display device according to an exemplary embodiment of the present invention.

Referring to FIGs. 1 and 2, a display device, according to an exemplary embodiment of the present invention, may have various shapes. For example, the display device may be formed in a rectangular plate shape having two pairs of parallel sides. However, the invention is not limited thereto. When the display device has a rectangular plate shape, one of the two pairs may be longer than the other.

According to an exemplary embodiment of the present invention, the display device may include a display panel 100 including a plurality of pixels PXL and a backlight unit 200 providing light to the display panel 100. The display device may be a liquid crystal display device.

The display panel 100 may include a display area DA and a non-display area NDA disposed on at least one side of the display area DA.

The display area DA may refer to an area where a pixel unit 110 is disposed, and an image may be displayed on the display area DA. The display area DA may have various shapes. For example, the display area DA may have a polygonal shape. However, the display area DA may have a circular or elliptical shape, or another shape with curved sides. The display area DA may also have a semi-circular or semi-elliptical shape with straight and curved sides.

The pixel unit 110 may include the pixels PXL coupled to gate lines GLi to GLn and data lines DL1 to DLm. Each of the pixels PXL may be coupled to a corresponding gate line (e.g., GLi), among the gate lines GLi to GLn, and a corresponding data line (e.g., DLi), among the data lines DL1 to DLm. Each of the pixels PXL may include a thin film transistor, a liquid crystal capacitor, a storage capacitor, and a pixel electrode. A structure of each pixel PXL will be described below.

A gate driver 120, a data driver 130, a timing controller 140, and a backlight dimming controller 180 may be arranged in the non-display area NDA. The non-display area NDA may include no pixels PXL, and accordingly the image might not be displayed in the non-display area NDA.

The timing controller 140 may receive digital video data from an external source through an interface, such as a low voltage differential signaling (LVDS) interface or a transition minimized differential signaling (TMDS) interface. The timing controller 140 may receive a vertical synchronization signal Vsync, a horizontal synchronization signal Hsync, a data enable signal DE and a clock signal Clk from the external system. The timing controller 140 may generate a gate control signal GCS and a data control signal DCS to control the gate driver 120 and the data driver 130, respectively, for example, by using the above signals.

The gate driver 120 may supply a scan signal to the gate lines GLi to GLn in response to the gate control signal GCS generated from the timing controller 140. For example, the gate driver 120 may sequentially supply the scan signal to the gate lines GLi to GLn, so that pixels PXL may be selected in units of horizontal lines.

The data driver 130 may supply a data signal corresponding to 1 line to the data lines DL1 to DLm every horizontal period in response to the data control signal DCS from the timing controller 140. The above data signal supplied to the data lines DL1 to DLm may be supplied to the pixels PXL as selected by the scan signal. The data driver 130 may supply the data signal to the data lines DL1 to DLm so as to be synchronized with the scan signal.

The backlight dimming controller 180 may determine a dimming operation of a light source disposed in the backlight unit 200.

The backlight unit 200 may be disposed under the display panel 100 and driven by the backlight dimming controller 180 to evenly provide light to the display panel 100. The backlight unit 200 may be a direct type backlight or an edge type backlight.

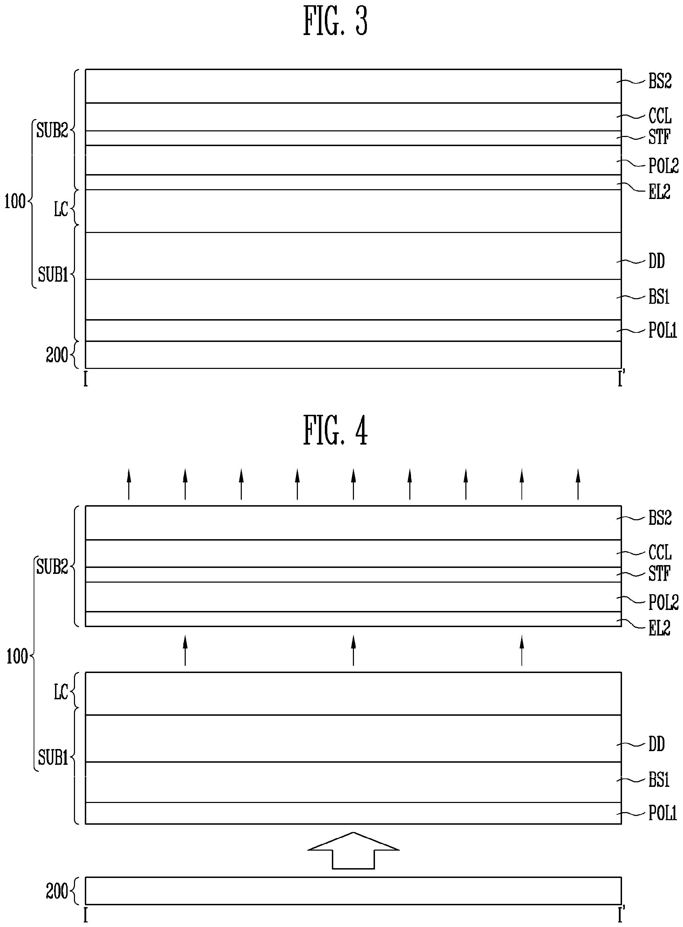

FIG. 3 is a cross-sectional diagram taken along line I-I' of FIG. 1. FIG. 4 is a cross-sectional diagram illustrating a moving direction of light in a display device shown in FIG. 3.

Referring to FIGs. 1, 3, and 4, according to an exemplary embodiment of the present invention, the display device may include a display panel 100 and a backlight unit 200 disposed under the display panel 100.

The display panel 100 may include a first substrate SUB1, a second substrate SUB2, and a liquid crystal layer LC disposed therebetween.

The first substrate SUB1 may include a first base substrate BS1, a display layer DD disposed on the first base substrate BS1, and a first polarizing layer POLi disposed between the first base substrate BS1 and the backlight unit 200.

The first base substrate BS1 may support various components formed thereon. The first base substrate BS1 may include an insulating material such as glass or resin. The first base substrate BS1 may include a flexible material so that the first base substrate BS1 may be bent or folded. The first base substrate BS1 may have a single-layer structure or a multilayer structure.

For example, the first base substrate BS1 may include at least one of polystyrene, polyvinyl alcohol, polymethyl methacrylate, polyethersulfone, polyacrylate, polyetherimide, polyethylene naphthalate, polyethylene terephthalate, polyphenylene sulfide, polyarylate, polyimide, polycarbonate, triacetate cellulose, and cellulose acetate propionate. However, the first base substrate BS1 may include various other materials in addition to the above materials.

The display layer DD may be arranged in the display area DA and may be a pixel unit 110 in which the plurality of pixels PXL are disposed, as shown in FIG. 2. Each of the pixels PXL may be the minimum unit for displaying an image. Each pixel PXL may include a thin film transistor, a liquid crystal capacitor, a storage capacitor, and a first electrode. The first electrode may be a pixel electrode coupled to the thin film transistor.

The first polarizing layer POL1 may be disposed on one surface of the first base substrate BS1, for example, the surface where the display layer DD is not disposed. The first polarizing layer POL1 may polarize light provided from the backlight unit 200 in a predetermined direction and provide the polarized light to the first base substrate BS1. As shown in FIGs. 3 and 4, the first polarizing layer POL1 may be disposed on one surface of the first base substrate BS1. However, the invention is not limited thereto. For example, the first polarizing layer POL1 may be disposed on another surface of the first base substrate BS1, e.g., the surface where the display layer DD is disposed while the first polarizing layer POL1 is in the form of a thin film.

The liquid crystal layer LC may include a plurality of liquid crystal molecules having dielectric anisotropy. The liquid crystal molecules of the liquid crystal layer LC may rotate in a predetermined direction when an electric field is applied between the first substrate SUB1 and the second substrate SUB2, so that light may be selectively transmitted or blocked by the liquid crystal layer LC.

The second substrate SUB2 may include a second electrode EL2, a second polarizing layer POL2, a selective transmission film STF, a color conversion layer CCL, and a second base substrate BS2.

The second electrode EL2 may oppose the first electrode and form an electric field together with the first electrode to drive the liquid crystal layer LC. The second electrode EL2 may be a common electrode, disposed over the entire second base substrate BS2. The first electrode and the second electrode EL2 may be disposed on different base substrates, however, the invention is not limited thereto. For example, the first electrode and the second electrode EL2 may be disposed on the same substrate.

The second polarizing layer POL2 may be disposed on the second electrode EL2 and may polarize light passing through the liquid crystal layer LC in a predetermined direction to provide the polarized light to the color conversion layer CCL. The second polarizing layer POL2 may be a wire grid polarizing layer in which wire grid patterns are separated from each other by a predetermined distance. The second polarizing layer POL2 may include a planarizing layer that planarizes the surface by reducing irregularities of thickness of lower structures thereof. As shown in FIGs. 3 and 4, the second polarizing layer POL2 may be disposed on one surface of the second base substrate BS2, for example, the surface where the second electrode EL2 is disposed. However, the invention is not limited thereto. For example, the second polarizing layer POL2 may be a film that is disposed on another surface of the second base substrate BS2, for example, the surface where the color conversion layer CCL is not provided.

The selective transmission film STF may be disposed on the second polarizing layer POL2, and may transmit the light passing through the liquid crystal layer LC to the color conversion layer CCL and reflect light incident on the liquid crystal layer LC from the color conversion layer CCL. For example, the selective transmission film STF may be configured so that a thin prism film and a reflective polarizing film are bonded to each other. In this example, light incident on surfaces of a prism that are inclined at an angle may be reflected, while light incident on the remaining surfaces thereof may be transmitted. A dual brightness enhancement film (DBEF) may be used as the selective transmission film STF. Alternatively, a reflective polarization film, in which a plurality of layers having different refractive indices are repeatedly stacked on each other, may be used as the selective transmission film STF.

The color conversion layer CCL may be disposed on the selective transmission film STF and may convert light provided from the selective transmission film STF into light of a predetermined color for each pixel PXL to emit the converted light. The color conversion layer CCL is described below.

The second base substrate BS2 may include the same material as the first base substrate BS1, but the invention is not limited thereto.

The backlight unit 200 may be arranged on one surface of the display panel 100, for example, under the surface where the first polarizing layer POL1 is disposed. The backlight unit 200 may include a light source providing light to the display panel 100 and optical members converting the light provided from the light source into surface light. The light source may include a plurality of light emitting diodes arranged on a printed circuit board. However, the invention is not limited thereto. Each of the light emitting diodes may emit blue light. However, the invention is not limited thereto, and, for example, each of light emitting diodes may emit white light. An exemplary embodiment of the present invention is described below under the assumption that the backlight unit 200 emits blue light.

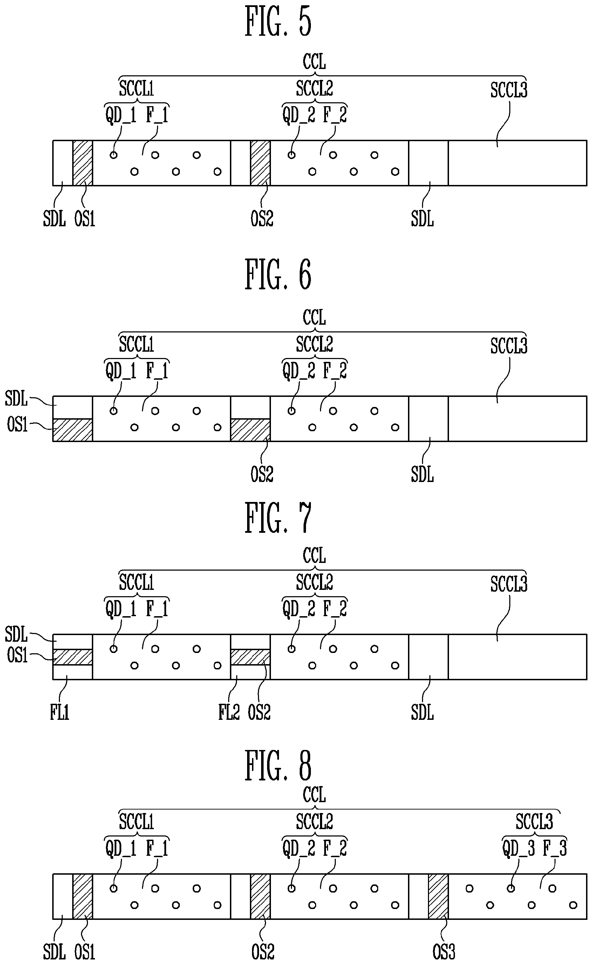

FIG. 5 is a cross-sectional diagram illustrating the color conversion layer CCL shown in FIG. 3.

Referring to FIGs. 3 and 5, according to an exemplary embodiment of the present invention, a color conversion layer CCL may include first, second, and third sub-color conversion units SCCL1, SCCL2, and SCCL3. The first, second, and third sub-color conversion units SCCL1, SCCL2, and SCCL3 may correspond to a pixel PXL as shown in FIG. 2, respectively. For example, the first sub-color conversion unit SCCL1 may correspond to the pixel PXL coupled to a first gate line GLi and a first data line DL1, the second sub-color conversion unit SCCL2 may correspond to a pixel coupled to the first gate line GLi and a second data line DL2 adjacent to the first data line DL1, and the third sub-color conversion unit SCCL3 may correspond to a pixel coupled to the first gate line GLi and a third data line DL3 adjacent to the second data line DL2.

The first sub-color conversion unit SCCL1 may convert blue light supplied from a backlight unit 200 into first color light. The first color light may be red light. For example, the first sub-color conversion unit SCCL1 may absorb blue light supplied from the backlight unit 200 and shift a wavelength of the blue light by energy transition to emit red light having a wavelength of approximately 620 nm to 680 nm.

The first sub-color conversion unit SCCL1 may include a first base layer F_1 and first quantum dots QD_1 dispersed in the first base layer F_1. The first base layer F_1 may be made of a transparent resin. The first quantum dots QD_1 may be red quantum dots converting the blue light into red light.

The second sub-color conversion unit SCCL2 may convert the blue light provided from the backlight unit 200 into second color light. The second color light may be green light. For example, the second sub-color conversion unit SCCL2 may absorb the blue light provided from the backlight unit 200 and shift a wavelength of the blue light by energy transition to emit green light having a wavelength of approximately 500nm to 560nm.

The second sub-color conversion unit SCCL2 may include a second base layer F_2 and second quantum dots QD_2 dispersed in the second base layer F_2. The second base layer F_2 may be made of a transparent resin. The second quantum dots QD_2 may be green quantum dots for converting the blue light into green light.

The first and second quantum dots QD_1 and QD_2 may be selected from a Group II-IV compound, a Group IV-VI compound, a Group IV element, a Group IV compound, and a combination thereof.

The Group II-VI compound may be selected from a binary element compound selected from the group consisting of CdSe, CdTe, ZnS, ZnSe, ZnTe, ZnO, HgS, HgSe, HgTe, MgSe, MgS, and a combination thereof; a ternary element compound selected from the group consisting of CdSeS, CdSeTe, CdSTe, ZnSeS, ZnSeTe, ZnSTe, HgSeS, HgSeTe, HgSTe, CdZnS, CdZnSe, CdZnTe, CdHgS, CdHgSe, CdHgTe, HgZnS, HgZnSe, HgZnTe, MgZnSe, MgZnS, and a combination thereof; and a quaternary element compound selected from the group consisting of HgZnTeS, CdZnSeS, CdZnSeTe, CdZnSTe, CdHgSeS, CdHgSeTe, CdHgSTe, HgZnSeS, HgZnSeTe, HgZnSTe, and a combination thereof. The Group III-V compound may be selected from a binary element compound selected from the group consisting of GaN, GaP, GaAs, GaSb, AlN, AlP, AlAs, AlSb, InN, InP, InAs, InSb, and a combination thereof; a ternary element compound selected from the group consisting of GaNP, GaNAs, GaNSb, GaPAs, GaPSb, AlNP, AlNAs, AlNSb, AlPAs, AlPSb, InNP, InNAs, InNSb, InPAs, InPSb, GaAlNP, and a combination thereof; and a quaternary element compound selected from the group consisting of GaAlNAs, GaAlNSb, GaAlPAs, GaAlPSb, GaInNP, GaInNAs, GaInNSb, GaInPAs, GaInPSb, InAlNP, InAlNAs, InAlNSb, InAlPAs, InAlPSb, and a combination thereof. The Group IV-VI compound may be selected from the group consisting of a binary element compound selected from the group consisting of SnS, SnSe, SnTe, PbS, PbSe, PbTe, and a combination thereof; a ternary element compound selected from the group consisting of SnSeS, SnSeTe, SnSTe, PbSeS, PbSeTe, PbSTe, SnPbS, SnPbSe, SnPbTe, and a combination thereof; and a ternary element compound selected from the group consisting of SnPbSSe, SnPbSeTe, SnPbSTe, and a combination thereof. The Group IV element may be selected from the group consisting of Si, Ge, and a combination thereof. The group IV compound may be a binary element compound selected from the group consisting of SiC, SiGe, and a combination thereof.

The binary element compound, the ternary element compound or the quaternary element compound may be present in particles at a uniform concentration, or may be divided into regions having partially different concentration distributions. The first and second quantum dots QD_1 and QD_2 may each have a core/shell structure in which one quantum dot surrounds another quantum dot. The interface between the core and the shell may have a concentration gradient so that the concentration of elements present in the shell decreases toward the center thereof.

The first and second quantum dots QD_1 and QD_2 may have a full width of half maximum (FWHM) of an emission wavelength spectrum of approximately 45 nm or less. Color purity or color reproducibility may be increased within this range. Light emitted from the first and second quantum dots QD_1 and QD_2 may be discharged in all directions, so that a viewing angle may be widened.

The first and second quantum dots QD_1 and QD_2 may have various shapes. However, according to some exemplary embodiments of the present invention, the first and second quantum dots QD_1 and QD_2 may be formed into shapes such as a sphere, a pyramid, multi-arm or cubic nano particles, nanotubes, nanowires, nanofibers, and/or nano plate particles.

The third sub-color conversion unit SCCL3 may directly transmit the blue light provided from the backlight unit 200. The third sub-color conversion unit SCCL3 may include a transparent layer. The transparent layer may include transparent polymer. Since the blue light provided from the backlight unit 200 transmits through the transparent layer of the third sub-color conversion unit SCCL3, the third sub-color conversion unit SCCL3 may provide blue light. The third sub-color conversion unit SCCL3, including the transparent layer, may emit the blue light without requiring the use of quantum dots.

A light blocking layer SDL and an optical sensor adjacent to the light blocking layer SDL may be arranged between the first, second, and third sub-color conversion units SCCL1, SCCL2, and SCCL3. In some embodiments, an optical sensor may be adjacent to the first and second sub-color conversion units SCCL1, SCCL2.

The light blocking layer SDL may be disposed between the first, second, and third sub-color conversion units SCCL1, SCCL2, and SCCL3 to prevent crosstalk of the first, second, and third sub-color conversion units SCCL1, SCCL2, and SCCL3. The light blocking layer SDL may be arranged in a peripheral area surrounding the pixel PXL and may prevent the blue light provided from the backlight unit 200 from being incident on structures disposed in the peripheral area, for example, a thin film transistor, a wiring unit, and the like. The light blocking layer SDL may be a black matrix. However, embodiments of the invention are not limited thereto, and the light blocking layer SDL may include light blocking materials.

An optical sensor may be arranged in the peripheral area so as to be adjacent to the light blocking layer SDL. For example, the optical sensor may be arranged at one side of the light blocking layer SDL in the peripheral area. The optical sensor may detect light emitted from the color conversion layer CCL in real time. The optical sensor may be arranged in the peripheral area so as to correspond to each of the first and second sub-color conversion units SCCL1 and SCCL2 disposed in the color conversion layer CCL. An optical sensor need not be disposed to correspond to the third sub-color conversion unit SCCL3, as the third sub-color conversion unit SCCL3 might not contain quantum dots. However, if all three sub-color conversion units include quantum dots, then all three sub-color conversion units might have optical sensors. In one embodiment of the present invention, detecting light in real time by the optical sensor may mean detecting the amount of light, that is, the intensity of light in real time.

The optical sensor may include a first optical sensor OS1 disposed on the left side of the first sub-color conversion unit SCCL1 and a second optical sensor OS2 disposed on the left side of the second sub-color conversion unit SCCL2. As shown in FIG. 5, the first optical sensor OS1 may be disposed between the light blocking layer SDL and the first-sub color conversion layer SCCL1, and the second optical sensor OS2 may be disposed between the light blocking layer SDL and the second sub-color conversion unit SCCL2.

The first optical sensor OS1 may detect the red light emitted from the first sub-color conversion unit SCCL1 in real time, and the second optical sensor OS2 may detect the green light emitted from the second sub-color conversion unit SCCL2 in real time. For example, the first optical sensor OS1 may detect the red light emitted from the first quantum dots QD_1 of the first sub-color conversion unit SCCL1, and the second optical sensor OS2 may detect the green light emitted from the second quantum dots QD_2 of the second sub-color conversion unit SCCL2.

The first and second optical sensors OS1 and OS2 may provide optical signals of the light emitted from the first and second sub-color conversion units SCCL1 and SCCL2, respectively, through a lead out line to the timing controller 140, as shown in FIG. 2. The timing controller 140 may detect deterioration of the first and second sub-color conversion units SCCL1 and SCCL2 and provide the corrected data to the data driver 130 by using the optical signals provided from the first and second optical sensors OS1 and OS2 and the data signal provided from the data driver 130 as shown in FIG. 2.

For example, when an image with a mura defect is displayed in the middle of the pixel unit 110, as shown in FIG. 2, the first and second optical sensors OS1 and OS2 may detect light generated from the color conversion layer CCL corresponding to an area with the mura defect and provide an optical signal corresponding thereto to the timing controller 140. The timing controller 140 may provide a compensation data signal for compensation of the mura to the data driver 130 by using the optical signals provided from the first and second optical sensors OS1 and OS2 and a data signal corresponding to the central region of the pixel unit 110.

As described above, the first and second optical sensors OS1 and OS2 may be arranged adjacent to the first and second sub-color conversion units SCCL1 and SCCL2, respectively, and detect light emitted from the first and second sub-color conversion units SCCL1 and SCCL2 to determine deterioration of the first and second quantum dots QD_1 and QD_2 disposed in the first and second sub-color conversion units SCCL1 and SCCL2, respectively, in real time.

According to an exemplary embodiment of the present invention, the display device may emit light having excellent color reproducibility through the color conversion layer CCL included in the first and second quantum dots QD_1 and QD_2 to increase light emission efficiency.

The display device may detect light emitted from the color conversion layer CCL in real time to determine deterioration of the first and second quantum dots QD_1 and QD_2.

The display device may output compensation data to compensate for mura caused by the deterioration of the first and second quantum dots QD_1 and QD_2 to reduce image quality degradation caused by the mura, thereby increasing display quality.

FIGs. 6 to 8 are cross-sectional diagrams illustrating the color conversion layer CCL shown in FIG. 5 according to an exemplary embodiment of the present invention. Hereinafter, differences between this embodiment and the earlier described embodiment are mainly described. It may be assumed that elements not discussed in detail are similar to or identical to corresponding elements that have been previously described.

Referring to FIGs. 5 and 6, a color conversion layer CCL may include a first, second, and third sub-color conversion units SCCL1, SCCL2, and SCCL3. A light blocking layer SDL may be disposed between the first, second, and third sub-color conversion units SCCL1, SCCL2, and SCCL3.

The first sub-color conversion unit SCCL1 may convert the blue light provided from a backlight unit 200, as shown in FIG. 3, into red light, and may include a first base layer F_1 and a first quantum dots QD_1 dispersed in the first base layer F_1. The second sub-color conversion unit SCCL2 may convert the blue light provided from the backlight unit 200 into green light and may include a second base layer F_2 and a second quantum dots QD_2 dispersed in the second base layer F_2. The third sub-color conversion unit SCCL3 may include a transparent layer directly transmitting the blue light provided from the backlight unit 200.

The light blocking layer SDL may be disposed between the first, second, and third sub-color conversion units SCCL1, SCCL2, and SCCL3 and may prevent crosstalk of the first, second, and third sub-color conversion units SCCL1, SCCL2, and SCCL3. The light blocking layer SDL may be a black matrix.

An optical sensor may be disposed adjacent to the light blocking layer SDL on one surface where the blue light from the backlight unit 200 is incident. For example, the optical sensor may include a first optical sensor OS1 adjacent to the light blocking layer SDL disposed on the left of the first sub-color conversion unit SCCL1 and a second optical sensor OS2 adjacent to the light blocking layer SDL disposed on the left of the second sub-color conversion unit SCCL2. As shown in FIG. 5, the first and second optical sensors OS1 and OS2 may be disposed under the light blocking layer SDL.

The red light emitted from the first sub-color conversion unit SCCL1 may be incident on the first optical sensor OS1. The first optical sensor OS1 may convert the red light into a corresponding optical signal and provide the optical signal to the timing controller 140 as shown in FIG. 2 through a lead-out line coupled to the first optical sensor OS1. The light blocking layer SDL disposed over the first optical sensor OS1 may prevent external light from shining into the first optical sensor OS1. Therefore, the first optical sensor OS1 may detect only the red light emitted from the first sub-color conversion unit SCCL1 and determine the deterioration of the first quantum dots QD_1 of the first sub-color conversion unit SCCL1.

The green light emitted from the second sub-color conversion unit SCCL2 may be incident on the second optical sensor OS2. The second optical sensor OS2 may convert the green light to a corresponding optical signal and provide the optical signal to the timing controller 14 through a lead-out line coupled to the second optical sensor OS2. The light blocking layer SDL disposed over the second optical sensor OS2 may prevent external light from shining into the second optical sensor OS2. Therefore, the second optical sensor OS2 may detect only the green light emitted from the second sub-color conversion unit SCCL2 to determine deterioration of the second quantum dots QD_2 of the second sub-color conversion unit SCCL2.

Referring to FIGs. 5 and 7, a color conversion layer CCL may include a first, second, and third sub-color conversion units SCCL1, SCCL2, and SCCL3. A light blocking layer SDL may be disposed between the first, second, and third sub-color conversion units SCCL1, SCCL2, and SCCL3.

The first sub-color conversion unit SCCL1 may convert the blue light provided from a backlight unit 200, as shown in FIG. 3, into red light, and may include a first base layer F_1 and a first quantum dots QD_1 dispersed in the first base layer F_1. The second sub-color conversion unit SCCL2 may convert the blue light provided from the backlight unit 200 into green light, and may include a second base layer F_2 and a second quantum dots QD_2 dispersed in the second base layer F_2. The third sub-color conversion unit SCCL3 may include a transparent layer that directly transmits the blue light provided from the backlight unit 200.

The light blocking layer SDL may be disposed between the first, second, and third sub-color conversion units SCCL1, SCCL2, and SCCL3 and may prevent crosstalk of the first, second, and third sub-color conversion units SCCL1, SCCL2, and SCCL3. The light blocking layer SDL may be a black matrix. As used herein, "crosstalk" may refer to the phenomenon in which light of one colored pixel influences the light of another colored pixel.

An optical sensor adjacent to the light blocking layer SDL and a filter layer adjacent to the optical sensor may be disposed on one surface on which the blue light from the backlight unit 200 is incident.

The optical sensor may include a first optical sensor OS1 adjacent to one side of the light blocking layer SDL disposed on the left of the first sub-color conversion unit SCCL1 and a second optical sensor OS2 adjacent to one side of the light blocking layer SDL disposed on the left of the second sub-color conversion unit SCCL2. The filter layer may include a first filter layer FL1 adjacent to one side of the first optical sensor OS1 and a second filter layer FL2 arranged at one side of the second optical sensor OS2.

The first filter layer FL1 may be a black matrix but the invention is not limited thereto. For example, the first filter layer FL1 may be a red color filter transmitting only the red light. Therefore, the first filter layer FL1 may block the blue light supplied from the backlight unit 200 from shining into the first optical sensor OS1. Therefore, the first optical sensor OS1 may detect only the red light emitted from the first sub-color conversion unit SCCL1 to determine deterioration of the first quantum dots QD_1 of the first sub-color conversion unit SCCL1.

The second filter layer FL2 may be a black matrix but the invention is not limited thereto. For example, the second filter layer FL2 may be a green color filter transmitting only the green light. Therefore, the second filter layer FL2 may prevent the blue light provided from the backlight unit 200 from shining into the second optical sensor OS2. Therefore, the second optical sensor OS2 may detect only the green light emitted from the second sub-color conversion unit SCCL2 to determine deterioration of the second quantum dots QD_1 of the second sub-color conversion unit SCCL2.

Referring to FIGs. 5 and 8, a color conversion layer CCL may include a first, second, and third sub-color conversion units SCCL1, SCCL2, and SCCL3. A light blocking layer SDL may be disposed between the first, second, and third sub-color conversion units SCCL1, SCCL2, and SCCL3. Referring to FIG. 8, white light may be provided to the color conversion layer CCL from a backlight unit 200 as shown in FIG. 3.

The first sub-color conversion unit SCCL1 may convert the white light provided from the backlight unit 200 into red light, and may include a first base layer F_1 and a first quantum dots QD_1 dispersed in the first base layer F_1. The second sub-color conversion unit SCCL2 may convert the white light provided from the backlight unit 200 into green light, and may include a second base layer F_2 and a second quantum dots QD_2 dispersed in the second base layer F_2. The third sub-color conversion unit SCL3 may convert the white light supplied from the backlight unit 200 into blue light, and may include a third base layer F_3 and a third quantum dots QD_3 dispersed in the third base layer F_3. The third base layer F_3 may include a transparent resin. The third quantum dots QD_3 may include blue quantum dots converting the white light into blue light.

The light blocking layer SDL may be disposed between the first, second, and third sub-color conversion units SCCL1, SCCL2, and SCCL3 and prevent crosstalk of the first, second, and third sub-color conversion units SCCL1, SCCL2, and SCCL3. The light blocking layer SDL may be a black matrix.

An optical sensor may be disposed adjacent to one side of the light blocking layer SDL. The optical sensor may include a first optical sensor OS1 adjacent to one side of the light blocking layer SDL disposed on the left of the first sub-color conversion unit SCCL1, a second optical sensor OS2 adjacent to one side of the light blocking layer SDL disposed on the left of the second sub-color conversion unit SCCL2, and a third optical sensor OS3 adjacent to one side of the light blocking layer SDL disposed on the left of the third sub-color conversion unit SCCL3.

The red light emitted from the first sub-color conversion unit SCCL1 may be incident on the first optical sensor OS1. The first optical sensor OS1 may convert the red light into an optical signal and provide the optical signal to the timing controller 140, as shown in FIG. 2, through a lead-out line connected to the first optical sensor OS1. The first optical sensor OS1 may detect the red light emitted from the first sub-color conversion unit SCCL1 to determine deterioration of the first quantum dots QD_1 of the first sub-color conversion unit SCCL1.

The green light emitted from the second sub-color conversion unit SCCL2 may be incident on the second optical sensor OS2. The second optical sensor OS2 may convert the green light into an optical signal and provide the optical signal to the timing controller 140 through a lead-out line connected to the second optical sensor OS2. As a result, the second optical sensor OS2 may detect the green light emitted from the second sub-color conversion unit SCCL2 and determine deterioration of the second quantum dots QD_2 of the second sub-color conversion unit SCCL2.

The blue light emitted from the third sub-color conversion unit SCCL3 may be incident on the third optical sensor OS3. The third optical sensor OS3 may convert the blue light into an optical signal and provide the optical signal to the timing controller 140 through a lead-out line connected to the third optical sensor OS3. As a result, the third optical sensor OS3 may detect the blue light emitted from the third sub-color conversion unit SCCL3 to determine deterioration of the third quantum dots QD_3 of the third sub-color conversion unit SCCL3.

A filter layer, as shown in FIG. 7, may be disposed adjacent to one side of each of the first, second and third optical sensors OS1, OS2, and OS3. For example, the first filter layer FL1 as shown in FIG. 7 may be disposed adjacent to the first optical sensor OS1, the second filter layer FL2, as shown in FIG. ,7 may be disposed adjacent to the third optical sensor OS3. The first filter layer FL1 may be a red color filter transmitting only red light, the second filter layer FL2 may be a green color filter transmitting only green light, and the third filter layer may be a blue color filter transmitting only blue light.

The first filter layer FL1 may block the white light provided from the backlight unit 200 from shining into the first optical sensor OS1. The second filter layer FL2 may block the white light provided from the backlight unit 200 from shining into the second optical sensor OS2. The third filter layer may block the white light provided from the backlight unit 200 from shining into the third optical sensor OS3.

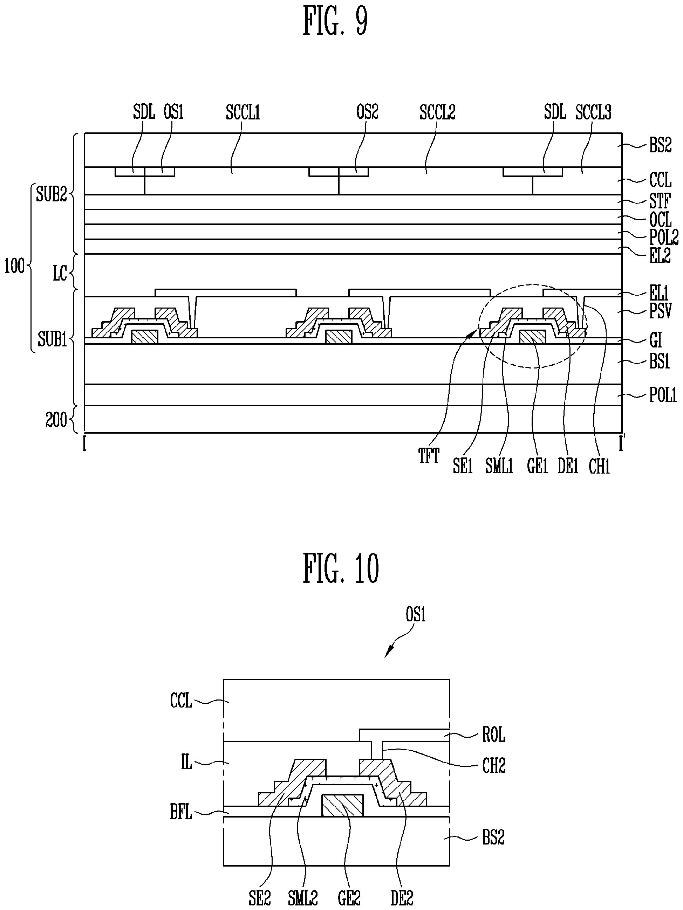

FIG. 9 is a detailed cross-sectional diagram illustrating the display device shown in FIG. 3.

Referring to FIGs. 3 and 9, according to an exemplary embodiment of the present invention, a display device may include a display panel 100 and a backlight unit 200 disposed under the display panel 100.

The display panel 100 may include a first substrate SUB1, a second substrate SUB2, and a liquid crystal layer LC disposed between the first and second substrates SUB1 and SUB2.

The first substrate SUB1 may include a first base substrate BS1 including a plurality of pixels PXL, as shown in FIG. 2, thin film transistors TFT disposed over the first base substrate BS1, first electrodes EL1 connected to the thin film transistors TFT, and a first polarizing layer POL1 disposed between the first base substrate BS1 and the backlight unit 200. Each of the pixels PXL may include the thin film transistor TFT and the first electrode EL1 connected to the thin film transistor TFT.

The second substrate SUB2 may include a second base substrate BS2, a color conversion layer CCL disposed on the second base substrate BS2, a selective transmission film STF disposed on the color conversion layer CCL, a second polarizing layer POL2 disposed on the selective transmission film STF, and a second electrode EL2 disposed on the second polarizing layer POL2.

The backlight unit 200 may be disposed on one surface of the display panel 100, e.g., under the surface where the first polarizing layer POL1 is disposed. The backlight unit 200 may include a light source providing light to the display panel 100 and optical members converting light provided from the light source into surface light.

Hereinafter, the display device according to an exemplary embodiment of the present invention is described according to a stacking order. For convenience of explanation, the first substrate SUB1 is described first and the second substrate SUB2 is then described.

The first base substrate BS1 may be a rigid substrate or a flexible substrate. For example, the rigid substrate may be one of a glass substrate, a quartz substrate, a glass ceramic substrate, or a crystalline substrate. The flexible substrate may be one of a plastic substrate or a film substrate including a polymer organic material. Materials applied to the first base substrate BS1 may have resistance with respect to high processing temperature (or heat resistance) during manufacturing processes.

First gate electrodes GE1 may be disposed on the first base substrate BS1. The first gate electrodes GE1 may include at least one of gold (Au), silver (Ag), aluminum (Al), molybdenum (Mo), chromium (Cr), titanium (Ti), nickel (Ni), neodymium (Nd), or copper (Cu), or an alloy thereof. The first gate electrode GE1 may be formed in a single layer. However, the invention is not limited thereto, and the first gate electrode GE1 may have a multilayer structure having at least two materials stacked on each other.

A buffer layer may be disposed between the first base substrate BS1 and the first gate electrodes GE1. The buffer layer may block diffusion of impurities into the thin film transistor TFT. The buffer layer may be formed in a single layer, or as a multilayer structure including at least two layers.

The buffer layer may be an inorganic insulating layer including an inorganic material. For example, the buffer layer may include a silicon nitride, a silicon oxide, or a silicon oxynitride. When the buffer layer has a multilayer structure, the respective layers may be formed of the same material or different materials. The buffer layer might not be formed depending on the material or manufacturing conditions of the first base substrate BS1.

A gate insulating layer GI including the first gate electrodes GE1 may be disposed on the first base substrate BS1. The gate insulating layer GI may be an inorganic insulating layer including an inorganic material. As the inorganic material, polysiloxane, silicon nitride, silicon oxide, or silicon oxynitride may be used.

First semiconductor layers SML1 may be disposed on the gate insulating layer GI. The first semiconductor layers SML1 may be provided in the form of a thin film on the gate insulating layer GI. The first semiconductor layers SML1 may be disposed over the first gate electrodes GE1 and partially overlap with the first gate electrodes GE1. The first semiconductor layers SML1 may be semiconductor patterns including polysilicon, amorphous silicon, or oxide semiconductor.

A first source electrode SE1 and a first drain electrode DE1 separated from the first source electrode SE1 may be disposed on the first semiconductor layer SML1. The first source electrode SE1 may cover one side of the first semiconductor layer SML1 and the first drain electrode DE1 may cover another side of the first semiconductor layer SML1.

Each of the first source electrode SE1 and the first drain electrode DE1 may include a conductive material, for example, metal. Each of the first source electrode SE1 and the first drain electrode DE1 may include a single metal. However, each of the first source electrode SE1 and the first drain electrode DE1 may include two types of metals, or an alloy of at least two metals. For example, each of the first source electrode SE1 and the first drain electrode DE1 may include nickel, chromium, molybdenum, aluminum, titanium, copper, tungsten, and/or an alloy thereof. Each of the first source electrode SE1 and the first drain electrode DE1 may have a single-layer structure or a multilayer structure. For example, each of the first source electrode SE1 and the first drain electrode DE1 may have a dual-layer structure including a layer of titanium and a layer of copper.

A passivation layer PSV may be disposed on the first source electrodes SE1 and the first drain electrodes DE1. The passivation layer PSV may be an inorganic insulating layer including an inorganic material or an organic insulating layer including an organic material. Examples of the inorganic material may include polysiloxane, silicon nitride, silicon oxide, and silicon oxynitride. As the organic material, polyacrylic compounds, polyimide compounds, fluorocarbon compounds such as Teflon, and benzocyclobutene compounds may be used. The passivation layer PSV may include a first contact hole CH1 exposing a portion of the first drain electrode DE1.

The first electrode EL1 may be disposed on the passivation layer PSV. The first electrode EL1 may be coupled to the first drain electrode DE1 through the first contact hole CH1. The first electrode EL1 may include a transparent conductive material. The first electrode E1 may include a transparent conductive oxide. The transparent conductive oxide may include indium tin oxide (ITO), indium zinc oxide (IZO), or indium tin zinc oxide (ITZO).

The first polarizing layer POL1 may be disposed on a rear surface of the first base substrate BS1 (e.g., the surface where the thin film transistor TFT is not disposed).

The first polarizing layer POL1 may reduce loss of light provided from the backlight unit 200 and polarize the light in a predetermined direction to provide the light to the liquid crystal layer LC.

The second substrate SUB2 is described below in the stacking order.

The second base substrate BS2 may be disposed. The second base substrate BS2 may include the same material as the first base substrate BS1. However, the invention is not limited thereto.

The color conversion layer CCL may be disposed on the second base substrate BS2. The color conversion layer CCL may include a first, second, and third sub-color conversion units SCCL1, SCCL2, and SCCL3. A light blocking layer SDL may be disposed between the first, second, and third sub-color conversion units SCCL1, SCCL2, and SCCL3. Each of the first and second optical sensors OS1 and OS2 may be disposed adjacent to one side of the light blocking layer SDL.

Each of the first, second, and third sub-color conversion units SCCL1, SCCL2, and SCCL3 may be disposed so as to correspond to each of the pixels PXL. The first sub-color conversion unit SCCL1 may convert the blue light provided from the backlight unit 200 into red light. The second sub-color conversion unit SCCL2 may convert the blue light provided from the backlight unit 200 into green light and directly emit the green light. The third sub-color conversion unit SCCL3 may directly emit the blue light provided from the backlight unit 200 without converting the color of the light. In some embodiments, the first and second optical sensors OS1 and OS2 may be provided adjacent the first and second sub-color conversion units SCCL1 and SCCL2 of each pixel. In other embodiments, the first and second optical sensors OS1 and OS2 may only be provided for some pixels.

The light blocking layer SDL may be disposed in a peripheral area surrounding each pixel PXL. The first and second optical sensors OS1 and OS2 may be disposed adjacent to the light blocking layer SDL in the peripheral area.

The selective transmission film STF may be disposed on the color conversion layer CCL. The selective transmission film STF may transmit light passing through the liquid crystal layer LC to the color conversion layer CCL and reflect light incident on the liquid crystal layer LC from the color conversion layer CCL.

An overcoat layer OCL may be disposed on the selective transmission film STF. The overcoat layer OCL may reduce irregularities of thickness of lower structures to planarize the surface thereof.

The second polarizing layer POL2 may be disposed on the overcoat layer OCL. The second polarizing layer POL2 may polarize light passing through the liquid crystal layer LC in a predetermined direction and provide the polarized light to the selective transmission film STF.

The second electrode EL2 may be disposed on the second polarizing layer POL2. The second electrode EL2 may be a common electrode forming an electric field together with the first electrode EL1. The second electrode EL2 may include a transparent conductive material. For example, the second electrode EL2 may include a conductive metal oxide such as indium tin oxide (ITO), indium zinc oxide (IZO), or indium tin zinc oxide (ITZO).

The liquid crystal layer LC including liquid crystal molecules may be disposed between the first substrate SUB1 and the second substrate SUB2.

FIG. 10 is an enlarged view illustrating a first optical sensor of the optical sensor shown in FIG. 9.

Referring to FIGs. 9 and 10, according to an exemplary embodiment of the present invention, a first optical sensor OS1 may include an optical detection thin film transistor and a lead-out line ROL connected to the optical detection thin film transistor.

The optical detection thin film transistor may include a second gate electrode GE2, a second semiconductor layer SML2, a second source electrode SE2, and a second drain electrode DE2.

The second gate electrode GE2 may be disposed on the second base substrate BS2 and may include metal. For example, the second gate electrode GE2 may include at least one of gold (Au), silver (Ag), aluminum (Al), molybdenum (Mo), chromium (Cr), titanium (Ti), nickel (Ni), neodymium (Nd), and copper (Cu), or an alloy thereof. The second gate electrode GE2 may be formed in a single layer. However, the invention is not limited thereto, and the second gate electrode GE2 may have a multilayer structure including at least two of the metals and/or alloys stacked on each other.

The second semiconductor layer SML2 may be disposed on the second gate electrode GE2 with a buffer layer BFL interposed therebetween. The buffer layer BFL may prevent diffusion of impurities into the first optical sensor OS1. However, the buffer layer BFL may be omitted, depending on the material and manufacturing conditions of the second base substrate BS2.

The second semiconductor layer SML2 may be provided in the form of a thin film on the buffer layer BFL. The second semiconductor layer SML2 may be a semiconductor pattern including polysilicon, amorphous silicon, or oxide semiconductor.

The second source electrode SE2 and the second drain electrode DE2 may be disposed on the second semiconductor layer SML2. The second source electrode SE2 may cover one side of the second semiconductor layer SML2 and the second drain electrode DE2 may cover the other side of the second semiconductor layer SML2 facing one side thereof. Each of the second source electrode SE2 and the second drain electrode DE2 may include a conductive material, for example, metal.

The second drain electrode DE2 may be connected to the lead-out line ROL through a second contact hole CH2 formed in the interlayer insulating layer IL.

The first optical sensor OS1 may detect red light provided from the first sub-color conversion unit SCCL1 in real time to determine deterioration of the first sub-color conversion unit SCCL1.

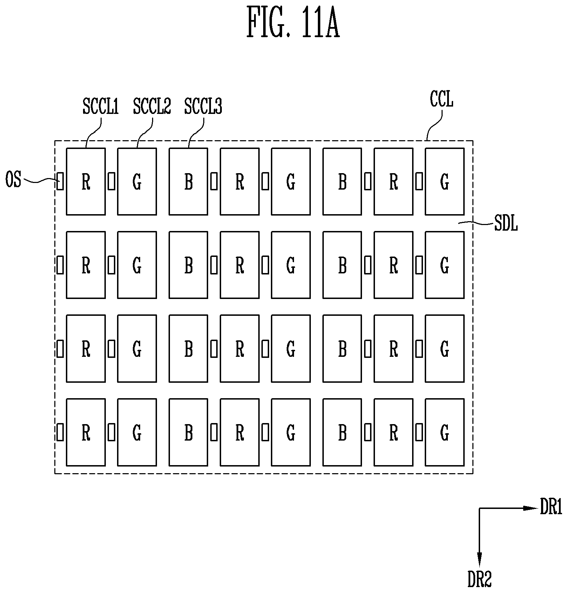

According to an exemplary embodiment of the present invention, the optical sensor may be arranged in various manners. FIGs. 11A to 11D illustrate the arrangement of components of a color conversion layer according to an exemplary embodiment of the present invention.

FIGs. 11A to 11D are plan views illustrating the arrangement of components of the color conversion layer shown in FIG. 5. As shown in FIGs. 11A to 11D, the color conversion layer may include first to third sub-color conversion units. Light emitted from the first sub-color conversion unit is illustrated as red light R, light emitted from the second sub-color conversion unit is illustrated as green light G, and light emitted from the third sub-color conversion unit is illustrated as blue light B.

Referring to FIG. 11A, according to an exemplary embodiment of the present invention, a color conversion layer CCL may include a first, second, and third sub-color conversion units SCCL1, SCCL2, and SCCL3. Each of the first, second, and third sub-color conversion units SCCL1, SCCL2, and SCCL3 may be arranged to correspond to each of a pixels PXL as shown in FIG. 2.

The color conversion layer CCL may have a generally quadrilateral shape, for example, a quadrilateral shape. According to an exemplary embodiment of the present invention, the color conversion layer CCL may have a pair of long sides extending in a first direction DR1 and a pair of short sides extending in a second direction DR2 that crosses the first direction DR1. However, the shape of the color conversion layer CCL is not limited thereto, and the shape of the color conversion layer CCL may correspond to the shape of a first and second base substrates BS1 and BS2 as shown in FIG. 9. For example, when each of the first and second base substrates BS1 and BS2 has various shapes, such as a closed polygon including straight sides; a circle or an oval including curved sides; and a semi-circle or a semi-oval including straight and curved lines, the color conversion layer CCL may have a shape corresponding thereto.

A light blocking layer SDL may be disposed adjacent to each of the first, second, and third sub-color conversion units SCCL1, SCCL2, and SCCL3. Optical sensors OS may be disposed in the light blocking layer SDL.

The optical sensors OS may be disposed on the left of the first sub-color conversion unit SCCL1 and the left of the second sub-color conversion unit SCCL2, respectively. Blue light from a backlight unit 200, as shown in FIG. 3, may be provided to the color conversion layer CCL.

The optical sensor OS disposed on the left of the first sub-color conversion unit SCCL1 may detect the red light R emitted from the first sub-color conversion unit SCCL1 to determine deterioration of the first sub-color conversion unit SCCL1. The optical sensor OS disposed on the left of the second sub-color conversion unit SCCL2 may detect the green light G emitted from the second sub-color conversion unit SCCL2 and determine deterioration of the second sub-color conversion unit SCCL2.

FIG. 11A illustrates that each of the optical sensors OS is disposed on the left of each of the first and second sub-color conversion units SCCL1 and SCCL2. However, the invention is not limited thereto. For example, each of the optical sensors OS may be disposed on the right of each of the first and second sub-color conversion units SCCL1 and SCCL2.

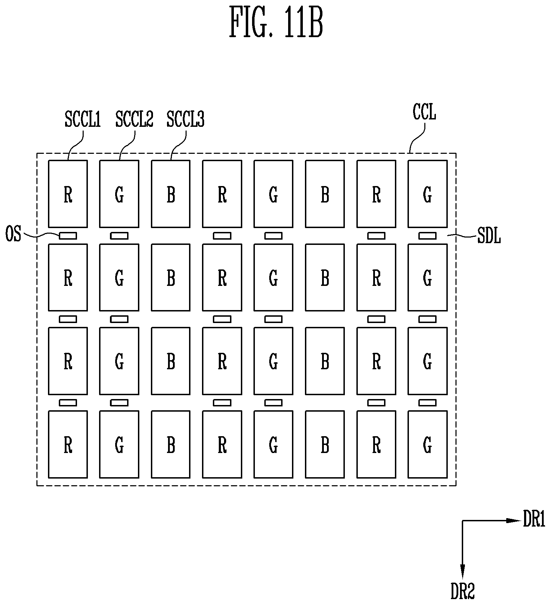

Referring to FIG. 11B, according to an exemplary embodiment of the present invention, a color conversion layer CCL may include a first, second, and third sub-color conversion units SCCL1, SCCL2, and SCCL3. A light blocking layer SDL may be disposed adjacent to each of the first, second, and third sub-color conversion units SCCL1, SCCL2, and SCCL3, and an optical sensors OS may be disposed in the light blocking layer SDL.

The optical sensors OS may be disposed under the first sub-color conversion unit SCCL1 and under the second sub-color conversion unit SCCL2, respectively. The blue light from a backlight unit 200, as shown in FIG. 3, may be provided to the color conversion layer CCL.

The optical sensor OS disposed under the first sub-color conversion unit SCCL1 may detect the red light R emitted from the first sub-color conversion unit SCCL1 arranged thereon to determine deterioration of the first sub-color conversion unit SCCL1. The optical sensor OS disposed under the second sub-color conversion unit SCCL2 may detect the green light G emitted from the second sub-color conversion unit SCCL2 arranged thereon to determine deterioration of the second sub-color conversion unit SCCL2.

FIG. 11B illustrates that the optical sensors OS are disposed under the first and second sub-color conversion units SCCL1 and SCCL2, respectively. However, the invention is not limited thereto. For example, the optical sensors OS may be disposed above the first and second sub-color conversion units SCCL1 and SCCL2, respectively.

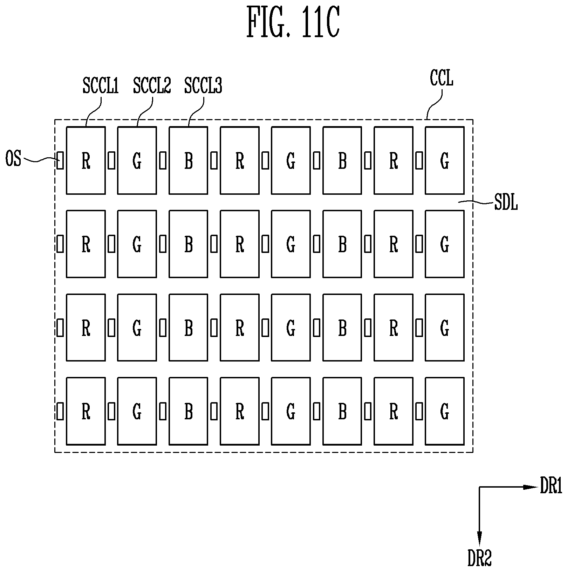

Referring to FIG. 11C, according to an exemplary embodiment of the present invention, a color conversion layer CCL may include a first, second, and third sub-color conversion units SCCL1, SCCL2, and SCCL3. A light blocking layer SDL may be disposed adjacent to each of the first, second, and third sub-color conversion units SCCL1, SCCL2, and SCCL3, and an optical sensors OS may be disposed in the light blocking layer SDL.

The optical sensors OS may be disposed on the left of the first sub-color conversion unit SCCL1, on the left of the second sub-color conversion unit SCCL2, and on the left of the third sub-color conversion unit SCCL3, respectively. White light from a backlight unit 200, as shown in FIG. 3, may be provided to the color conversion layer CCL. The optical sensors OS may detect the red light R, the green light G, and the blue light B of the first to third sub-conversion units SCCL1, SCCL2, and SCCL3 to determine deterioration of the first to third sub-conversion units SCCL1, SCCL2, and SCCL3, respectively.

FIG. 11C illustrates each of the optical sensors OS disposed on the left of each of the first, second, and third sub-color conversion units SCCL1, SCCL2, and SCCL3. However, the invention is not limited thereto. For example, each of the optical sensors OS may be disposed on the right of each of the first, second, and third sub-color conversion units SCCL1, SCCL2, and SCCL3. Alternatively, each of the optical sensors OS may be disposed under or above each of the first to third sub-conversion units SCCL1, SCCL2, and SCCL3.

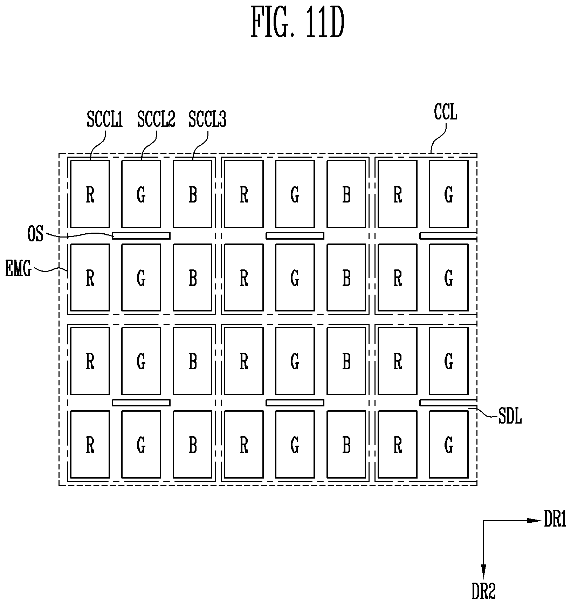

Referring to FIG. 11D, according to an exemplary embodiment of the present invention, a color conversion layer CCL may include a first, second, and third sub-color conversion units SCCL1, SCCL2, and SCCL3. The color conversion layer CCL may include a plurality of emission groups EMG each consisting of two first sub-color conversion units SCCL1 arranged in a first column extending in the second direction DR2, two second sub-color conversion units SCCL2 arranged in a second column adjacent to the first column, and two third sub-color conversion units SCCL3 arranged in a third column adjacent to the second column.

A light blocking layer SDL may be disposed adjacent to each of the first, second, and third sub-color conversion units SCCL1, SCCL2, and SCCL3. Optical sensors OS may be disposed in the light blocking layer SDL.

The optical sensors OS may detect light emitted from the plurality of emission groups EMG to determine deterioration of the plurality of emission groups EMG, respectively.

The optical sensors OS may be disposed at regular intervals in the light blocking layer SDL. However, the invention is not limited thereto. For example, the optical sensors OS may be disposed at irregular intervals in the light blocking layer SDL. For example, the optical sensors OS may be randomly arranged in the light blocking layer SDL. Some or all.

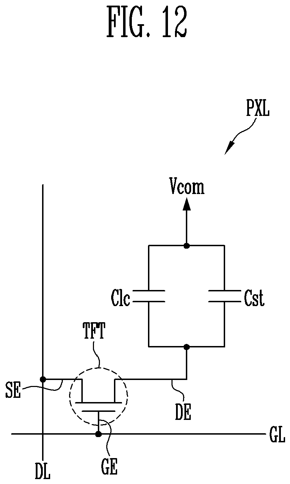

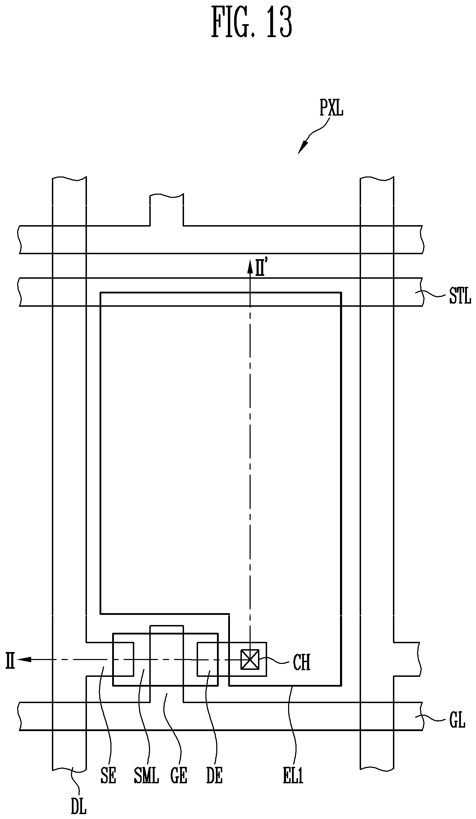

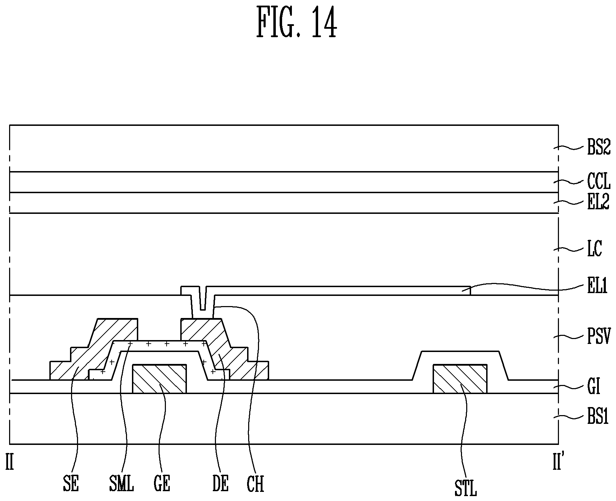

FIG. 12 is an equivalent circuit diagram of an example of the pixel PXL shown in FIG. 2. FIG. 13 is a detailed plan view illustrating the pixel PXL shown in FIG. 12. FIG. 14 is a cross-sectional view taken along line II-II' of FIG. 13. According to an exemplary embodiment of the present invention, a display device may include a plurality of signal lines and a plurality of pixels connected to the signal lines. FIGs. 12 to 14 illustrate a circuit diagram of one of the pixels PXL. The pixel PXL is illustrated to have a rectangular shape. However, the invention is not limited thereto, and the pixel PXL may have various shapes.

Referring to FIGs. 2 and 12, the signal lines may include a gate line GL transferring a gate signal and a data line DL transferring a data signal. The gate line GL may extend in a first direction (e.g., a row direction), and the data line DL may extend in a second direction (e.g., a column direction) crossing the first direction.

The pixel PXL may include a thin film transistor TFT, a liquid crystal capacitor Clc, and a storage capacitor Cst coupled to the gate line GL and the data line DL.

A gate electrode GE of the thin film transistor TFT may be coupled to the gate line GL, a source electrode SE of the thin film transistor TFT may be coupled to the data line DL, and a drain electrode DE of the thin film transistor TFT may be connected to the storage capacitor Cst coupled to the liquid crystal capacitor Clc and a storage wiring line STL.

When the gate signal is applied to the gate electrode GE, the thin film transistor TFT may be turned on, and the liquid crystal capacitor Clc and the storage capacitor Cst connected to the drain electrode DE may be charged with the data signal. The storage capacitor Cst may be charged with the data signal and maintain the same even after the thin film transistor TFT is turned off.

Referring to FIGs. 13 and 14, according to an exemplary embodiment of the present invention, a display device may include a first base substrate BS1 including a first electrode EL1, a second base substrate BS2 facing the first base substrate BS1 and including a second electrode EL2, and the liquid crystal layer LC disposed between the first base substrate BS1 and the second base substrate BS2.

An electronic device may be disposed on the first base substrate BS1. The first base substrate BS1 may include a transparent insulating material, for example, glass, silicon, quartz, or plastic. The first base substrate BS1 may be flexible.

The above electronic device may include the gate line GL, the data line DL, the storage wiring line STL, the thin film transistor TFT, and the first electrode EL1.

The gate line GL, the gate electrode GE coupled to the gate line GL, and the storage wiring line STL may be disposed on the first base substrate BS1.

A gate insulating layer GI may be disposed on the first base substrate BS1 including the gate line GL, the gate electrode GE, and the storage wiring line STL.

A semiconductor layer SML may be disposed on the gate insulating layer GI. The semiconductor layer SML may be a semiconductor pattern including polysilicon, amorphous silicon, oxide semiconductor, or the like.

The source electrode SE and the drain electrode DE separated from the source electrode SE may be disposed on the semiconductor layer SML.

A passivation layer PSV may be disposed on the source electrode SE and the drain electrode DE. The passivation layer PSV may include a contact hole CH partially exposing the drain electrode DE.

The first electrode EL1 may be disposed on the passivation layer PSV. The first electrode EL1 may be connected to the drain electrode DE through the contact hole CH. The first electrode EL1 may include a transparent conductive material. The first electrode EL1 may partially overlap with the storage wiring line STL and may form the storage capacitor Cst with the passivation layer PSV interposed therebetween.

A first polarizing layer may be disposed on a rear surface of the first base substrate BS1 (e.g., the surface where the thin film transistor TFT is not arranged).

The color conversion layer CCL and the second electrode EL2 may be disposed on the second base substrate BS2.

The second base substrate BS2 may include a transparent insulating material, for example, glass, silicon, quartz, or plastic, or plastic. The second base substrate BS2 may be flexible.

The color conversion layer CCL may convert light provided from the backlight unit 200 into light of a predetermined color for each pixel PXL.

The second electrode EL2 and the first electrode EL1 may form an electric field to drive the liquid crystal layer LC.

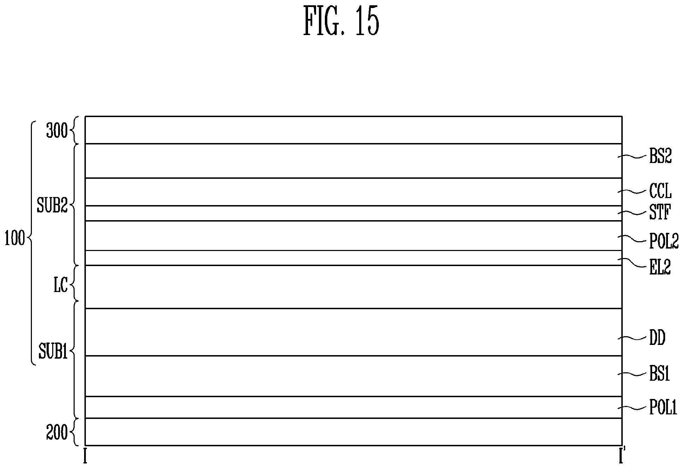

FIG. 15 is a cross-sectional diagram illustrating a display device according to an exemplary embodiment of the present invention. The differences between the embodiment shown in FIG. 15 and the earlier described embodiment are described to avoid repetitive description. Portions which are not particularly described in connection with the embodiment shown in FIG. 15 comply with the description about the above-described embodiment of the display device. Like or identical reference numerals may refer to like or identical parts and components.

Referring to FIG. 15, the display device according to an exemplary embodiment of the present invention may include the display panel 100 and the backlight unit 200 disposed under the display panel 100.

The display panel 100 may include a first substrate SUB1, a second substrate SUB2, a liquid crystal layer LC, and a touch sensor 300.

The first substrate SUB1 may include the first base substrate BS1, a display layer DD disposed on the first base substrate BS1, and a first polarizing layer POL1 disposed between the first base substrate BS1 and the backlight unit 200.

The second substrate SUB2 may include a second electrode EL2, a second polarizing layer POL2, a selective transmission film STF, a color conversion layer CCL, and a second base substrate BS2.

The touch sensor 300 may be disposed on the second base substrate BS2 and may recognize a touch event in the display device by a user's finger or a separate input device such as a stylus or pen. The touch sensor 300 may include sensing electrodes to detect touch and/or pressure. The type of the touch sensor 300 might not be particularly limited. For example, the touch sensor 300 may be a capacitance type or a piezoresistive type touch sensor. The capacitance type touch sensor may utilize a mutual capacitance method by which changes in capacitance by interactions between two sensing electrodes are sensed and/or a self-capacitance method by which changes in sensing electrodes are sensed.

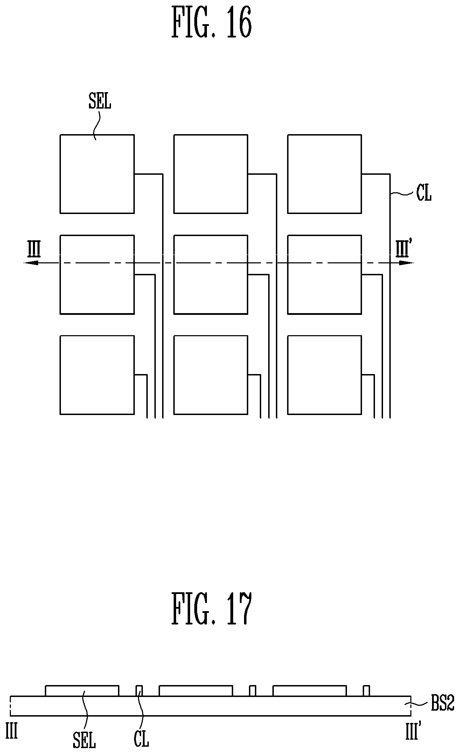

FIG. 16 is a plan view illustrating a self-capacitance type touch sensor of the display device shown in FIG. 15. FIG. 17 is a cross-sectional diagram taken along line III-III' of FIG. 16.

Referring to FIGs. 15 to 17, according to an exemplary embodiment of the present invention, a touch sensor 300 may include sensing electrodes SEL arranged in a matrix form on a second base substrate BS2. Connection lines CL may be connected to the sensing electrodes SEL, and a predetermined voltage may be applied through the connection lines CL. When a user touches a region of the touch sensor 300, capacitance of the sensing electrode SEL in the touched region may be changed. Changes in the predetermined voltage caused by the changes in the capacitance may be obtained to determine whether a touch is made at a predetermined position.

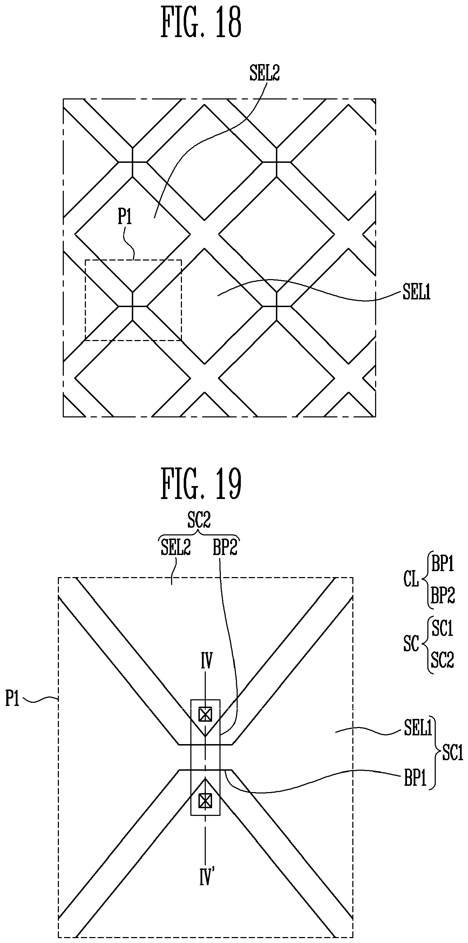

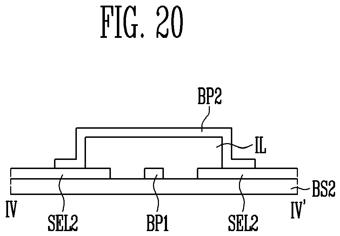

FIG. 18 illustrates a portion of a mutual capacitance type touch sensor of the display device shown in FIG. 15. FIG. 19 is an enlarged view illustrating a portion corresponding to P1 of FIG. 18. FIG. 20 is a cross-sectional view taken along line IV-IV' of FIG. 19.

Referring to FIGs. 15, and 18 to 20, according to an exemplary embodiment of the present invention, a touch sensor 300 may include sensing cells SC and the connection lines CL connected to the sensing cell SC and electrically connecting the sensing cell SC to an external driving circuit.

The sensing cells SC may include a first sensing cell SC1 and a second sensing cell SC2. The first sensing cell SC1 may include first sensing electrodes SEL1 extending in a first direction and a first bridge pattern BP1 connecting the first sensing electrodes SEL1. The second sensing cell SC2 may include second sensing electrodes SEL2 extending in a second direction crossing the first direction and a second bridge pattern BP2 connecting the second sensing electrodes SEL2 to each other. The first bridge pattern BP1 connecting the first sensing electrodes SEL1 and the second bridge pattern BP2 connecting the second sensing electrodes SEL2 may be included in the connection lines CL.

The first sensing electrodes SEL1 and the second sensing electrodes SEL2 may be formed as independent patterns which are not coupled to each other. When the first sensing electrodes SEL1 are coupled to the first bridge pattern BP1 formed integrally with the first sensing electrodes SEL1, the second sensing electrodes SEL2 may be connected to each other by the second bridge pattern BP2 separated by the insulating layer IL.

Either the first sensing electrodes SEL1 or the second sensing electrodes SEL2 may serve as a driving electrode and the other may serve as a sensing electrode.

According to an exemplary embodiment of the present invention, the first sensing electrodes SEL1, the second sensing electrodes SEL2, and the connection lines CL of the touch sensor 300 may be disposed on the second base substrate BS2.

As discussed above, embodiments of the invention can provide a display device, comprising: a first substrate; a second substrate facing the first substrate; a liquid crystal layer disposed between the first substrate and the second substrate; a color conversion layer disposed between the liquid crystal layer and the second substrate and including a plurality of sub-color conversion units for converting and emitting the light provided by a backlight unit into light of different predetermined colors; and an optical sensor disposed adjacent a sub-color conversion unit, the optical sensor being arranged to detect light from the sub-color conversion unit.

Each sub-color conversion unit may correspond to a pixel. An optical sensor may be disposed adjacent each pixel or adjacent each of a plurality of groups of pixels. An optical sensor may be disposed adjacent only some of the pixels or adjacent only some of a plurality of groups of pixels.

The first substrate may include a plurality of pixel areas and a plurality of peripheral areas disposed adjacent to each of the plurality of pixel areas. The or each optical sensor may be disposed within the peripheral area.

The plurality of sub-color conversion units may comprise a plurality of sub-color conversion units of a first type (e.g. including red quantum dots), a plurality of sub-color conversion units of a second type (e.g. including green quantum dots), and a plurality of sub-color conversion units of a third type (e.g. including blue quantum dots for a white backlight or including no quantum dots for a blue backlight). Hence, the first type of sub-color conversion units may include a first type of quantum dots for converting incident light into a first color (e.g. red), the second type of sub-color conversion units may include a second type of quantum dots for converting incident light into a second color (e.g. green), different from the first color. The third type of sub-color conversion units may include a third type of quantum dots for converting incident light into a second color (e.g. blue) or may transmit incident light (e.g. not requiring quantum dots).

The display device may comprise a plurality of optical sensors. Each optical sensor may be disposed adjacent to one of the plurality of sub-color conversion units. For example, the plurality of optical sensors may include first optical sensors for detecting the light of the first color, and second optical sensors for detecting the light of the second color.

The color conversion layer may include a plurality of emission groups each including a predetermined number of sub-color conversion units, among the plurality of sub-color conversion units, and the or each optical sensor may be disposed in one of the plurality of emission groups. Hence, the or each optical sensor may be detecting light from the sub-color conversion units in each emission group. Hence, the optical sensor may be arranged to detect light emitted from a plurality of the sub-color conversion units.

The display may comprise a controller arranged to determine deterioration of the plurality of sub-color conversion units by using an optical signal from the or each optical sensor, and be arranged to output compensation data. Hence, each optical sensor may generate an optical signal which may be used by the processor to generate compensation data.

The backlight unit may include a light source arranged to emit blue light or white light.

According to an exemplary embodiment of the present invention, a display device capable of increasing display quality may be provided.

While the present invention has been shown and described with reference to exemplary embodiments thereof, it will be apparent to those of ordinary skill in the art that various changes in form and detail may be made therein without departing from the scope of the present invention as defined by the following claims.

## Claims

1. A display device, comprising:
a first substrate (BS1);
a second substrate (BS2) facing the first substrate;
a liquid crystal layer (LC) disposed between the first substrate and the second substrate;
a backlight unit (200) arranged to provide light to the liquid crystal layer;
a color conversion layer (CCL) disposed between the liquid crystal layer and the second substrate and including a plurality of sub-color conversion units (SCCL1; SCCL2; SCCL3) for converting and emitting the light provided by the backlight unit into light of different predetermined colors; and
an optical sensor (OS1; OS2; OS3) disposed adjacent a side of a sub-color conversion unit of the plurality of sub-color conversion units, the optical sensor being arranged to detect light from the backlight that has been converted by the sub-color conversion unit into the predetermined colors.

2. The display device of claim 1, comprising a plurality of optical sensors, each optical sensor being disposed adjacent to a side of one of the plurality of sub-color conversion units.

3. The display device of claim 1 or 2, wherein the first substrate includes a plurality of pixel areas and a plurality of peripheral areas disposed adjacent to each of the plurality of pixel areas;
wherein the or each optical sensor is disposed within a peripheral area.

4. The display device of claim 3, further comprising a first light blocking layer disposed in the peripheral areas and arranged to block the light provided by the backlight unit from being incident on the peripheral areas;
optionally wherein the or each optical sensor is disposed between the first light blocking layer and one of the plurality of sub-color conversion units;
optionally wherein the first light blocking layer is a black matrix, further optionally wherein the black matrix defines a plurality of pixels, wherein the or each optical sensor is disposed behind the black matrix.

5. The display device of claim 4, further comprising a second light blocking layer arranged to prevent the light provided by the backlight unit from being incident on the or each optical sensor;
optionally wherein the second light blocking layer is disposed at a first side of the optical sensor.

6. The display device of claim 5, wherein the second light blocking layer includes a same material as the first light blocking layer; or
wherein the second light blocking layer is a filter arranged to transmit light having a predetermined wavelength.

7. The display device of any one of claims 1 to 6, wherein the plurality of sub-color conversion units comprise a plurality of sub-color conversion units of a first type, a plurality of sub-color conversion units of a second type, and a plurality of sub-color conversion units of a third type, the first type of sub-color conversion units including a first type of quantum dots for converting incident light into a first color, the second type of sub-color conversion units including a second type of quantum dots for converting incident light into a second color, different from the first color;
optionally wherein the first quantum dots are red quantum dots and the second quantum dots are green quantum dots.

8. The display device of claim 7, comprising a plurality of optical sensors, each optical sensor being disposed adjacent to one of the plurality of sub-color conversion units, the plurality of optical sensors including first optical sensors for detecting the light of the first color, and second optical sensors for detecting the light of the second color.

9. The display device of claim 8, wherein the third type of sub-color conversion units includes no quantum dots and is configured to transmit the incident light, without changing the color of the incident light, and the plurality of optical sensors does not include optical sensors for detecting the incident light passed through the third type of sub-color conversion units.

10. The display device of claim 8, wherein the third type of sub-color conversion units include a third type of quantum dots for converting incident light into a third color different from the first and second color, and the plurality of optical sensors includes third optical sensors for detecting the light of the third color;
optionally wherein the third quantum dots are blue quantum dots.

11. The display device of claims 1 to 7, wherein the color conversion layer includes a plurality of emission groups each including a predetermined number of sub-color conversion units, among the plurality of sub-color conversion units, and
wherein the or each optical sensor is disposed in one of the plurality of emission groups.

12. The display device of claim 11, wherein the or each optical sensor is configured to detect light emitted from the predetermined number of sub-color conversion units included in one of the plurality of emission groups.

13. The display device of any one of claims 1 to 12, wherein the backlight unit includes a light source arranged to emit blue light.

14. The display device of any one of claims 1 to 13, further comprising a touch sensor disposed on the second substrate.

15. The display device of any one of claims 1 to 14, further comprising a selective transmission unit disposed between a second electrode and the color conversion layer, arranged to transmit light emitted from the liquid crystal layer to the color conversion layer, and arranged to reflect the light incident on the liquid crystal layer from the color conversion layer.

16. The display device of any one of claims 1 to 15, further comprising a controller arranged to determine deterioration of the plurality of sub-color conversion units by using an optical signal from the or each optical sensor, and arranged to output compensation data.

## Patentansprüche

1. Anzeigevorrichtung, umfassend:
ein erstes Substrat (BS1);
ein zweites Substrat (BS2), das dem ersten Substrat zugewandt ist;
eine Flüssigkristallschicht (LC), die zwischen dem ersten Substrat und dem zweiten Substrat angeordnet ist;
eine Hintergrundbeleuchtungseinheit (200), die dazu eingerichtet ist, für die Flüssigkristallschicht Licht bereitzustellen;
eine Farbumwandlungsschicht (CCL), die zwischen der Flüssigkristallschicht und dem zweiten Substrat angeordnet ist und eine Mehrzahl von Farbumwandlungs-Untereinheiten (SCCL1; SCCL2; SCCL3) zum Umwandeln und Emittieren des von der Hintergrundbeleuchtungseinheit bereitgestellten Lichts in Licht unterschiedlicher vorgegebener Farben enthält; und
einen optischen Sensor (OS1; OS2; OS3), der angrenzend an eine Seite einer Farbumwandlungs-Untereinheit von der Mehrzahl von Farbumwandlungs-Untereinheiten angeordnet ist, wobei der optische Sensor dazu eingerichtet ist, Licht von der Hintergrundbeleuchtung zu erfassen, das von der Farbumwandlungs-Untereinheit in die vorgegebenen Farben umgewandelt wurde.

2. Anzeigevorrichtung nach Anspruch 1, die eine Mehrzahl von optischen Sensoren umfasst, wobei jeder optische Sensor angrenzend an eine Seite von einer von der Mehrzahl von Farbumwandlungs-Untereinheiten angeordnet ist.

3. Anzeigevorrichtung nach Anspruch 1 oder 2, wobei das erste Substrat eine Mehrzahl von Pixelbereichen und eine Mehrzahl von Randbereichen enthält, die angrenzend an jeden von der Mehrzahl von Pixelbereichen angeordnet ist;
wobei der bzw. jeder optische Sensor innerhalb von einem Randbereich angeordnet ist.

4. Anzeigevorrichtung nach Anspruch 3, ferner umfassend eine erste lichtblockierende Schicht, die in den Randbereichen angeordnet und dazu eingerichtet ist, zu blockieren, dass das von der Hintergrundbeleuchtungseinheit bereitgestellte Licht auf die Randbereiche fällt;
wobei gegebenenfalls der bzw. jeder optische Sensor zwischen der ersten lichtblockierenden Schicht und einer von der Mehrzahl von Farbumwandlungs-Untereinheiten angeordnet ist;
wobei gegebenenfalls die erste lichtblockierende Schicht eine Schwarzmatrix ist, wobei ferner gegebenenfalls die Schwarzmatrix eine Mehrzahl von Pixeln definiert, wobei der bzw. jeder optische Sensor hinter der Schwarzmatrix angeordnet ist.

5. Anzeigevorrichtung nach Anspruch 4, ferner umfassend eine zweite lichtblockierende Schicht, die dazu eingerichtet ist, das von der Hintergrundbeleuchtungseinheit bereitgestellte Licht daran zu hindern, dass es auf den bzw. jeden optischen Sensor fällt;
wobei gegebenenfalls die zweite lichtblockierende Schicht an einer ersten Seite des optischen Sensors angeordnet ist.

6. Anzeigevorrichtung nach Anspruch 5, wobei die zweite lichtblockierende Schicht dasselbe Material enthält wie die erste lichtblockierende Schicht, oder
wobei die zweite lichtblockierende Schicht ein Filter ist, das dazu eingerichtet ist, Licht mit einer vorgegebenen Wellenlänge durchzulassen.

7. Anzeigevorrichtung nach einem der Ansprüche 1 bis 6, wobei die Mehrzahl von Farbumwandlungs-Untereinheiten eine Mehrzahl von Farbumwandlungs-Untereinheiten eines ersten Typs, eine Mehrzahl von Farbumwandlungs-Untereinheiten eines zweiten Typs und eine Mehrzahl von Farbumwandlungs-Untereinheiten eines dritten Typs umfasst, wobei der erste Typ von Farbumwandlungs-Untereinheiten einen ersten Typ von Quantenpunkten zum Umwandeln von einfallendem Licht in eine erste Farbe enthält, der zweite Typ von Farbumwandlungs-Untereinheiten einen zweiten Typ von Quantenpunkten zum Umwandeln von einfallendem Licht in eine zweite Farbe enthält, die sich von der ersten Farbe unterscheidet;
wobei gegebenenfalls die ersten Quantenpunkte rote Quantenpunkte sind und die zweiten Quantenpunkte grüne Quantenpunkte sind.

8. Anzeigevorrichtung nach Anspruch 7, die eine Mehrzahl von optischen Sensoren umfasst, wobei jeder optische Sensor angrenzend an eine von der Mehrzahl von Farbumwandlungs-Untereinheiten angeordnet ist, wobei die Mehrzahl von optischen Sensoren erste optische Sensoren zum Erfassen des Lichts der ersten Farbe und zweite optische Sensoren zum Erfassen des Lichts der zweiten Farbe enthält.

9. Anzeigevorrichtung nach Anspruch 8, wobei der dritte Typ von Farbumwandlungs-Untereinheiten keine Quantenpunkte enthält und dazu ausgestaltet ist, das einfallende Licht durchzulassen, ohne die Farbe des einfallenden Lichts zu verändern, und die Mehrzahl optischer Sensoren keine optischen Sensoren zum Erfassen des einfallenden Lichts enthält, das durch den dritten Typ von Farbumwandlungs-Untereinheiten hindurchgestrahlt ist.

10. Anzeigevorrichtung nach Anspruch 8, wobei der dritte Typ von Farbumwandlungs-Untereinheiten einen dritten Typ von Quantenpunkten zum Umwandeln von einfallendem Licht in eine dritte Farbe enthält, die sich der ersten und zweiten Farbe unterscheidet, und die Mehrzahl von optischen Sensoren dritte optische Sensoren zum Erfassen des Lichts der dritten Farbe enthält;
wobei gegebenenfalls die dritten Quantenpunkte blaue Quantenpunkte sind.

11. Anzeigevorrichtung nach Anspruch 1 bis 7, wobei die Farbumwandlungsschicht eine Mehrzahl von Emissionsgruppen enthält, die jeweils eine vorgegebene Anzahl von Farbumwandlungs-Untereinheiten aus der Mehrzahl von Farbumwandlungs-Untereinheiten enthalten, und
wobei der bzw. jeder optische Sensor in einer von der Mehrzahl von Emissionsgruppen angeordnet ist.

12. Anzeigevorrichtung nach Anspruch 11, wobei der bzw. jeder optische Sensor dazu ausgestaltet ist, Licht zu erfassen, das von der vorgegebenen Anzahl von Farbumwandlungs-Untereinheiten, die in einer von der Mehrzahl von Emissionsgruppen enthalten sind, emittiert wird.

13. Anzeigevorrichtung nach einem der Ansprüche 1 bis 12, wobei die Hintergrundbeleuchtungseinheit eine Lichtquelle umfasst, die dazu eingerichtet ist, blaues Licht zu emittieren.

14. Anzeigevorrichtung nach einem der Ansprüche 1 bis 13, die ferner einen Berührungssensor umfasst, der auf dem zweiten Substrat angeordnet ist.

15. Anzeigevorrichtung nach einem der Ansprüche 1 bis 14, die ferner eine selektiv durchlässige Einheit umfasst, die zwischen einer zweiten Elektrode und der Farbumwandlungsschicht angeordnet ist, dazu eingerichtet ist, Licht, das von der Flüssigkristallschicht emittiert wird, zur Farbumwandlungsschicht durchzulassen, und dazu eingerichtet ist, das Licht, das auf die Flüssigkristallschicht fällt, von der Farbumwandlungsschicht zu reflektieren.

16. Anzeigevorrichtung nach einem der Ansprüche 1 bis 15, die ferner eine Steuerung umfasst, die dazu eingerichtet ist, einen Qualitätsverlust von der Mehrzahl von Farbumwandlungs-Untereinheiten durch Verwendung eines optischen Signals von dem bzw. jedem optischen Sensor bestimmt, und dazu eingerichtet ist, Ausgleichsdaten auszugeben.

## Revendications

1. Dispositif d'affichage comprenant :
un premier substrat (BS1) ;
un deuxième substrat (BS2) faisant face au premier substrat ;
une couche de cristaux liquides (LC) disposée entre le premier substrat et le deuxième substrat ;
une unité de rétroéclairage (200) agencée pour fournir de la lumière à la couche de cristaux liquides ;
une couche de conversion de couleur (CCL) disposée entre la couche de cristaux liquides et le deuxième substrat et comportant une pluralité de sous-unités de conversion de couleur (SCCL1 ; SCCL2 ; SCCL3) pour convertir et émettre la lumière fournie par l'unité de rétroéclairage en une lumière de différentes couleurs prédéterminées ; et
un capteur optique (OS1 ; OS2 ; OS3) disposé de manière adjacente à un côté d'une sous-unité de conversion de couleur de la pluralité de sous-unités de conversion de couleur, le capteur optique étant agencé pour détecter la lumière provenant du rétroéclairage qui a été convertie par la sous-unité de conversion de couleur en les couleurs prédéterminées.

2. Dispositif d'affichage de la revendication 1, comprenant une pluralité de capteurs optiques, chaque capteur optique étant disposé de manière adjacente à un côté de l'une de la pluralité de sous-unités de conversion de couleur.

3. Dispositif d'affichage de la revendication 1 ou 2, dans lequel le premier substrat comporte une pluralité de zones de pixels et une pluralité de zones périphériques disposées de manière adjacente à chacune de la pluralité de zones de pixels ;
dans lequel le ou chaque capteur optique est disposé dans une zone périphérique.

4. Dispositif d'affichage de la revendication 3, comprenant en outre une première couche de blocage de lumière disposée dans les zones périphériques et agencée pour empêcher la lumière fournie par l'unité de rétroéclairage d'être incidente sur les zones périphériques ;
éventuellement dans lequel le ou chaque capteur optique est disposé entre la première couche de blocage de lumière et l'une de la pluralité de sous-unités de conversion de couleur ;
éventuellement dans lequel la première couche de blocage de lumière est une matrice noire, en outre éventuellement dans lequel la matrice noire définit une pluralité de pixels, où le ou chaque capteur optique est disposé derrière la matrice noire.

5. Dispositif d'affichage de la revendication 4, comprenant en outre une deuxième couche de blocage de lumière agencée pour empêcher la lumière fournie par l'unité de rétroéclairage d'être incidente sur le ou chaque capteur optique ;
éventuellement dans lequel la deuxième couche de blocage de lumière est disposée sur un premier côté du capteur optique.

6. Dispositif d'affichage de la revendication 5, dans lequel la deuxième couche de blocage de lumière comporte un même matériau que la première couche de blocage de lumière ; ou
dans lequel la deuxième couche de blocage de lumière est un filtre agencé pour transmettre une lumière ayant une longueur d'onde prédéterminée.

7. Dispositif d'affichage de l'une quelconque des revendications 1 à 6, dans lequel la pluralité de sous-unités de conversion de couleur comprend une pluralité de sous-unités de conversion de couleur d'un premier type, une pluralité de sous-unités de conversion de couleur d'un deuxième type, et une pluralité de sous-unités de conversion de couleur d'un troisième type, le premier type de sous-unités de conversion de couleur comportant un premier type de points quantiques pour convertir la lumière incidente en une première couleur, le deuxième type de sous-unités de conversion de couleur comportant un deuxième type de points quantiques pour convertir la lumière incidente en une deuxième couleur, différente de la première couleur ;
éventuellement, dans lequel les premiers points quantiques sont des points quantiques rouges et les deuxièmes points quantiques sont des points quantiques verts.

8. Dispositif d'affichage de la revendication 7, comprenant une pluralité de capteurs optiques, chaque capteur optique étant disposé de manière adjacente à l'une de la pluralité de sous-unités de conversion de couleur, la pluralité de capteurs optiques comportant des premiers capteurs optiques pour détecter la lumière de la première couleur, et des deuxièmes capteurs optiques pour détecter la lumière de la deuxième couleur.

9. Dispositif d'affichage de la revendication 8, dans lequel le troisième type de sous-unités de conversion de couleur ne comporte pas de points quantiques et est configuré pour transmettre la lumière incidente, sans changer la couleur de la lumière incidente, et la pluralité de capteurs optiques ne comporte pas de capteurs optiques pour détecter la lumière incidente traversant le troisième type de sous-unités de conversion de couleur.

10. Dispositif d'affichage de la revendication 8, dans lequel le troisième type de sous-unités de conversion de couleur comporte un troisième type de points quantiques pour convertir la lumière incidente en une troisième couleur différente des première et deuxième couleurs, et la pluralité de capteurs optiques comporte des troisièmes capteurs optiques pour détecter la lumière de la troisième couleur ;
éventuellement, dans lequel les troisièmes points quantiques sont des points quantiques bleus.

11. Dispositif d'affichage des revendications 1 à 7, dans lequel la couche de conversion de couleur comporte une pluralité de groupes d'émission comportant chacun un nombre prédéterminé de sous-unités de conversion de couleur, parmi la pluralité de sous-unités de conversion de couleur, et
dans lequel le ou chaque capteur optique est disposé dans l'un de la pluralité de groupes d'émission.

12. Dispositif d'affichage de la revendication 11, dans lequel le ou chaque capteur optique est configuré pour détecter la lumière émise par le nombre prédéterminé de sous-unités de conversion de couleur incluses dans l'un de la pluralité de groupes d'émission.

13. Dispositif d'affichage de l'une quelconque des revendications 1 à 12, dans lequel l'unité de rétroéclairage comporte une source de lumière agencée pour émettre de la lumière bleue.

14. Dispositif d'affichage de l'une quelconque des revendications 1 à 13, comprenant en outre un capteur tactile disposé sur le deuxième substrat.

15. Dispositif d'affichage de l'une quelconque des revendications 1 à 14, comprenant en outre une unité de transmission sélective disposée entre une deuxième électrode et la couche de conversion de couleur, agencée pour transmettre la lumière émise par la couche de cristaux liquides à la couche de conversion de couleur, et agencée pour réfléchir la lumière incidente sur la couche de cristaux liquides à partir de la couche de conversion de couleur.

16. Dispositif d'affichage de l'une quelconque des revendications 1 à 15, comprenant en outre un dispositif de commande conçu pour déterminer la détérioration de la pluralité de sous-unités de conversion de couleur en utilisant un signal optique provenant du ou de chaque capteur optique, et conçu pour délivrer en sortie des données de compensation.
